# EUROPEAN PATENT SPECIFICATION

(11) **EP 2 628 278 B1**
(45) Date of publication and mention of the grant of the patent: **18.08.2021**
(21) Application number: 11832188.4
(22) Date of filing: 10.10.2011
(51) Int. Cl.: H04L 12/26, H04W 40/24, H04L 29/06, H04L 12/707, H04L 12/703, H04L 12/803, H04L 12/761

(54) **METHOD, SYSTEM AND ELEMENT FOR MULTIPURPOSE DATA TRAFFIC ENGINEERING AND ROUTING**
VERFAHREN, SYSTEM UND ELEMENT FÜR MEHRZWECK-DATENVERKEHRS-BEARBEITUNG UND -ROUTING
PROCÉDÉ, SYSTÈME ET ÉLÉMENT D'INGÉNIERIE ET D'ACHEMINEMENT DE TRAFIC DE DONNÉES À FONCTIONS MULTIPLES

(30) Priority: 12.10.2010 FI 20106049
(43) Date of publication of application: 21.08.2013
(73) Proprietor: Holmström, John, 00370 Helsinki (FI); Ramstedt, Kenneth, 00370 Helsinki (FI)
(72) Inventor: Holmström, John, 00370 Helsinki (FI); Ramstedt, Kenneth, 00370 Helsinki (FI)
(74) Representative: Kolster Oy Ab
(86) International application number: PCT/FI2011/050870
(87) International publication number: WO 2012/049363

(56) References cited:
- WO-A1-2006/003241
- WO-A2-01/61922
- US-A1- 2004 190 447
- US-A1- 2004 190 447
- US-A1- 2005 195 835
- US-A1- 2007 153 677
- US-A1- 2010 157 894
- BINOD VAIDYA ET AL: "Robust and secure routing scheme for wireless multihop network", PERSONAL AND UBIQUITOUS COMPUTING, SPRINGER VERLAG, LO, vol. 13, no. 7, 4 April 2009 (2009-04-04), pages 457-469, XP019742576, ISSN: 1617-4917, DOI: 10.1007/S00779-009-0220-0
- NORDMAN ET AL.: 'A TCP/IP Based Communication Architecture for Distribution Network Operation and Control' 17TH INTERNATIONAL CONFERENCE ON ELECTRICITY DISTRIBUTION, [Online] 12 May 2003 - 15 May 2003, BARCELONA, pages 2 - 3, XP008163128 Retrieved from the Internet: <URL:www.cired.be/CIRED03/reports/R%203-44. pdf> [retrieved on 2012-02-08]
- MOY PROTEON J ET AL: "OSPF Version 2; rfc1247.txt", INTERNET X.509 PUBLIC KEY INFRASTRUCTURE CERTIFICATE AND CERTIFICATE REVOCATION LIST (CRL) PROFILE; RFC5280.TXT, INTERNET SOCIETY (ISOC) 4, RUE DES FALAISES CH- 1205 GENEVA, SWITZERLAND, CH, 1 July 1991 (1991-07-01), XP015007035, ISSN: 0000-0003

## Description

### TECHNICAL FIELD OF INVENTION

The invention relates to data communications and communication networks.

### BACKGROUND OF THE INVENTION

A modern society relies highly upon reliable data communication. Reliable methods for transporting information are crucial. A constantly increasing amount of critical systems in a modern society are being remotely controlled and monitored. For example, the need for remote control in power utility and grid applications is increasing, the need for security surveillance is increasing, the need for secure transactions in the commercial sector is increasing, and so on.

At the same time as the need for secure communication is increasing, the risks are increasing. Systems face cyber attacks. Unreliable communication can severely damage the society. Furthermore, communication methods and modem technology is constantly evolving. Also, a communication system closely tied to a telecom operators services, may present risks - the owner of a critical communication system may have little or no control over the behavior of a telecom operator. Telecom operator's ownerships may change or telecom operators may discontinue certain communications services used by a customer needing it for his critical application.

The amount of networked communication systems is constantly increasing. At the same time as networked applications increase in numbers, vulnerability of the systems is increasing. The aforementioned is due, but not limited to, to a number of facts: The perhaps most widespread network protocol today is the IP-protocol (suite). The IP, or Internet Protocol, was developed in early 1970's. The widespread IP protocol and especially its TCP-part (Transmission Control Protocol), is without doubt a robust and generally "good" protocol, however, it lacks a number of important features needed to make the overall communication system reliable.

The word "overall" is important since it refers to a complete communication system and all its related elements in which the IP protocol is only one element for transferring information. As an analogy, and in general terms, encryption increases security of a communication system but it does not necessarily increase reliability. Generally, a communication system is as good as its weakest link. Finally, a communication system may require the use of a number of other communication methods in addition to the IP protocol.

Computers and devices wishing to communicate with the TCP/IP-protocol must be equipped with a piece of software called the IP stack. When a TCP/IP connection is opened from one peer to another peer, the IP-stack will handle the arbitration between the peers. If an application in one peer connects to another application in the other peer, the applications will connect on a TCP/IP socket. This is generally the situation when a control room application communicates with an application "in the field".

Due to the inherent design of the IP-stack, a socket connection which is opened over one physical media, that is, a modem or network interface, cannot be maintained uninterrupted if the physical media changes. If the physical media changes, the IP-stack needs to create and arbitrate a new socket connection using the new media. The IP-stack can not create the socket connection by itself as it must be initiated by the application.

The aforementioned results in, that the burden of maintaining a socket connection is on the application. Furthermore, it means that the IP-stack can not form a socket connection over multiple physical media simultaneously, which is very important considering redundancy. A solution where the application is in itself responsible for maintaining multiple redundant connections is in practice unfeasible since there is no uniform or standardized way for multi-channel redundant communication.

In addition to IP networking, there is a multitude of other, non-IP type of communication links. There is no uniform or standardized method for interconnecting IP and non-IP communication. A factory, for example, may have a multitude of devices or equipment interconnected by, for example, a physical serial communications method called RS-485. The RS485 link may not transfer IP-traffic. The same factory might have other devices and equipment that utilize IP-traffic over a local area network. In many cases there's a need for interconnecting the non-IP and IP communicating devices so that the overall system can be monitored and controlled from a central control room. Interconnection of the two different communication methods must be solved ad-hoc, and as with IP, the connections must be controlled on the application level.

Parallel redundant communication is important from a communication systems reliability point of view. Should one link fail, other channels should be able to continue. This is not possible to achieve in, but not limited to, multi-protocol environments, without ad-hoc solutions, that is, customized solutions for each purpose.

In addition to the communication redundancy, various physical links and connections do address encryption, data integrity, priority etc. in a very non-conforming way: Some connections implement all and others do not implement any of the important features. Implementations may be different, resulting in incompatibility.

Communication systems might be heavily riddled by other problems beyond communication issues. The problems, or difficulties, lie in equipment, devices and/or software messaging and communication protocols not being compatible.

A customer might have, and use, several devices designed for a specific purpose, for example, but not limited to, traffic light controllers. The devices might come from several manufacturers and thus, they might be incompatible in terms of communication and control - each manufacturer might implement their own, more or less, proprietary type of communication solution, rendering the equipment, devices and/or software incompatible. Problems of this kind are not only manufacturer related - equipment etc. might be of different generations and ages, thus their communications protocols might have evolved in such a way, that old and new equipment cannot interact.

BINODVAIDYA ET AL: "Robust and secure routing scheme for wireless multihop network",PERSONAL AND UBIQUITOUS COMPUTING, SPRINGER VERLAG, LO, vol. 13, no. 7, 4 April 2009 and patent documents US 2005/195835 A1, US 2004/190447 A1, and US 2010/157894 A1 represent relevant prior art.

### OBJECTS OF THE INVENTION

An object of the invention may be to provide a solution for increased reliability, robustness and security on transmission paths over multiple potentially unreliable connections.

Another object of the invention may be to provide a solution for transferring many kinds of data over variety of different physical communication media.

### SUMMARY OF THE INVENTION

The invention is defined by the independent claims.

The invention discloses a device, method, system and software program on a computer readable media that may improve reliability, robustness and security of data communications while maintaining simple usability for an end user.

First aspect of the invention is a router element for a network system. The router element comprises means for establishing and accepting an authenticated connection with a neighboring router element, for transmitting routing information to a connected neighboring router element, and receiving routing information from a connected neighboring router element. The router element is mainly characterized in that the router element further comprises means for accepting an authentication request from a node element; establishing a connection with an authenticated node element; routing packets from a first node element to a second node element based on received routing information through one or more simultaneous and parallel transmission paths formed by a plurality of node-router and/or router-router connections; and maintaining a transmission path regardless of changes in router-router connections between the first and the second node element based on received routing information as long as at least one continuous and functional transmission path exists between the node elements.

The neighboring router element may be for example is defined by it's address to the router elements memory, or it can be accessed through direct router-router connection from the router element. The node elements and the router elements may be realized with software, hardware and/or a combination of software and hardware.

In an embodiment of the invention the router element comprises means for establishing and maintaining one or more simultaneous and parallel transmission paths between a first node element and a second node element wherein the one or more transmission paths are seen as a single communication path by any external element connected to any of the node elements as long as at least one continuous and functional transmission path exists. The external element may be for example a device, software and/or piece of equipment.

In an embodiment of the invention the router element has means for using simultaneously multiple different communication media that may form communication links as said transmission path. The communication media can be for example a copper cable, optical cable, radio-frequency connection via mobile telecommunication network, satellite network, or any other communication medium that may form communication links and/or a combination of those. The number of different communication media can be for example more than two, three, four, five, six, seven, eight, nine, ten or in the region of 2-10, 3-9, 4-8 or 5-7.

In an embodiment of the invention the router element has means for transmitting the routing information to the connected neighboring router element when a change occurs in a node-router connection or router-router connection and when the router element receives changed routing information from a neighboring router element.

In an embodiment of the invention the router element has means for storing and using availability information of all the node and router elements of the network system. The availability information is based on the routing information that a router element transmits and receives.

In an embodiment of the invention the router element has means for detecting symmetrically and asymmetrically broken node-router connections and router-router connections by sending a probe message and receiving a response message, and means for disconnecting the connection that does not provide a response message to the probe message.

In an embodiment of the invention the router element has means for routing packets with multiple receiving node element addresses, wherein the router element has means for forwarding a packet with multiple receiving node addresses to a second router element if transmission paths of at least two receiving node addresses have common second router, and means for duplicating the packet with multiple receiving node addresses to be routed to a third router element and a fourth router element when the router element is the last common router element in transmission paths of the at least two receiving node addresses. This will save bandwidth on the common part of the transmission paths of the at least two receiving node addresses.

In an embodiment of the invention the router element has means for detecting a congestion problem in a connected node element, adding information about the congestion problem to routing information, and sending the changed routing information to neighboring router elements.

In an embodiment of the invention the router element has means for deciding whether to route a packet forward or to discard the packet based on network topology and/or routing information. For example, some packets may have a certain priority or service class which allows them to be delivered in fully functional network but discards the packets in a partially functional network system in order to save bandwidth for packets with higher priority or service class.

Second aspect of the invention is a method for routing packets between nodes of a network system. The method is mainly characterized in that it comprises steps of: establishing an authenticated connection from a router element to a neighboring router element; transmitting routing information from a router element to a connected neighboring router element; authenticating a first node element to a router element; establishing a connection between the first authenticated node element and a router element; establishing a connection between a second authenticated node element and a router element; routing packets from a first node element to a second node element based on received routing information through one or more simultaneous and parallel transmission paths formed by a plurality of node-router and/or router-router connections; and maintaining a transmission path regardless of changes in router-router connections between the first and the second node element based on received routing information as long as at least one continuous and functional transmission path exists between the node elements.

In an embodiment of the invention the method further comprises steps of establishing and maintaining one or more simultaneous and parallel transmission paths between a first node element and a second node element wherein the one or more transmission paths are seen as a single communication path by any external element connected to any of the node elements as long as at least one continuous and functional transmission path exists. The external element may be for example a device, software or piece of equipment.

In an embodiment of the invention the method further comprises step of transmitting the routing information to the connected neighboring router element when a change occurs in a node-router connection or router-router connection and when the router element receives changed routing information from a neighboring router element.

In an embodiment of the invention the method further comprises step of detecting symmetrically and asymmetrically broken node-router connections and router-router connections by sending a probe message and receiving a response message, and means for disconnecting the connection that does not provide a response message to the probe message.

In an embodiment of the invention the method further comprises steps of routing packets with multiple receiving node element addresses, wherein the router element has means for forwarding a packet with multiple receiving node addresses to a second router element if transmission paths of at least two receiving node addresses have common second router; and duplicating the packet with multiple receiving node addresses to be routed to a third router element and a fourth router element when the router element is the last common router element in transmission paths of the at least two receiving node addresses.

In an embodiment of the invention the method further comprises steps of detecting a congestion problem in a connected node element, adding information about the congestion problem to routing information, and sending the changed routing information to neighboring router elements.

In an embodiment of the invention the method further comprises step of deciding whether to route a packet forward or to discard the packet based on network topology and/or routing information.

Third aspect of the invention is a computer readable media comprising a software program product for routing packets between node elements of a network system. The computer readable media is mainly characterized in that the software program product comprises computer executable program code for: establishing an authenticated connection to a neighboring router element; transmitting routing information to a connected neighboring router element; receiving routing information from a connected neighboring router element; accepting an authentication request from a node element; establishing a connection to an authenticated node element; routing packets from a first node element to a second node element based on received routing information through one or more simultaneous and parallel transmission paths formed by a plurality of node-router and/or router-router connections; and maintaining a transmission path regardless of changes in router-router connections between the first and the second node element based on received routing information as long as at least one continuous and functional transmission path exists between the node elements.

In an embodiment of the invention the software program product further comprises computer executable program code for establishing and maintaining one or more simultaneous and parallel transmission paths between a first node element and a second node element wherein the one or more transmission paths are seen as a single communication path by any external element connected to any of the node elements as long as at least one continuous and functional transmission path exists. The external element may be for example a device, software or piece of equipment.

In an embodiment of the invention the software program product further comprises computer executable program code for transmitting the routing information to the connected neighboring router element when a change occurs in a node-router connection or router-router connection and when the router element receives changed routing information from a neighboring router element.

In an embodiment of the invention the software program product further comprises computer executable program code for detecting symmetrically and asymmetrically broken node-router connections and router-router connections by sending a probe message and receiving a response message, and means for disconnecting the connection that does not provide a response message to the probe message.

In an embodiment of the invention software program product further comprises computer executable program code for routing packets with multiple receiving node element addresses, wherein the router element has means for forwarding a packet with multiple receiving node addresses to a second router element if transmission paths of at least two receiving node addresses have common second router; and duplicating the packet with multiple receiving node addresses to be routed to a third router element and a fourth router element when the router element is the last common router element in transmission paths of the at least two receiving node addresses.

In an embodiment of the invention the software program product further comprises computer executable program code for detecting a congestion problem in a connected node element, adding information about the congestion problem to routing information, and sending the changed routing information to neighboring router elements.

In an embodiment of the invention the software program product further comprises computer executable program code for deciding whether to route a packet forward or to discard the packet based on network topology and/or routing information.

Fourth aspect of the invention is a network system. The network system is characterized in that it comprises the router element of the first aspect of the invention.

In an embodiment of the fourth aspect of the invention the network system further comprises two node elements and an external element after at least one node element, wherein at least one of the two node elements comprises a translation barrier, wherein a system specific message is translated to another system specific message.

### BRIEF DESCRIPTION OF DRAWINGS

In the following, the invention is described in greater detail with reference to the accompanying drawings in which
Figure 1 illustrates an example of a routing system
Figure 2 illustrates routing system network layout example
Figure 3 illustrates an example of a system with Configuration-, Authentication- and Network management servers
Figure 4 illustrates multiple physical node-router links
Figure 5 illustrates evenly distributed packets over multiple physical node-router links
Figure 6 illustrates unevenly distributed packets over multiple physical node-router links
Figure 7 illustrates a system with routers having different cloud numbers
Figure 8 illustrates system layout models
Figure 9 illustrates routing costs
Figure 10 illustrates an example of a packet layout
Figure 11 illustrates an example of an encapsulated packet layout
Figure 12 illustrates an example of a command word layout
Figure 13 is a table about Service class, associated cost value and actual cost
Figure 14 is a table about command type flags
Figure 15 is a table about message type definitions

Reference numbers in the figures and in the detailed description generally refer to elements according to following list but some exceptions may occur. Usually, a single reference number, for example 1, is intended to point to an element, for example a node, in general and a reference number followed by a letter, for example 11a, is intended to point to a specific element, for example a specific router.

### Reference number list:

(1) Node
(2) Device and/or software connection to node
(3) Translation barrier
(4) Sub-node to node connection
(5) DSiP system: Interconnected routers transporting DSiP messages
(6) Node-router connection
(7) Configuration server
(8) Sub-node
(9) External device and/or software
(10) Router-router connection
(11) Router
(12) Network management server
(13) Network management server log files
(14) Authentication server
(15) Authentication database
(16) Network management server database
(17) Router log files
(18) Router configuration data
(19) Synchronization node
(20) Alarm node
(21) Node configuration data
(22) Alarm node log files
(23) Alarm node external alarms
(24) DSiP packet (may be used e.g. in IP networks)
(2410) Target cloud
(2411) Target organization
(2412) Target
(2413) Sender cloud
(2414) Sender organization
(2415) Sender
(2416) Priority
(2417) Service class parameter
(2418) Message ID number
(2419) Message length
(2420) Command word
(2421) Data, parameters and payload
(25) DSiPS packet (may be used e.g. in serial communication)
(2510) Opening flag
(2511) Control flag
(2512) Time stamp
(2513) Packet padding placeholder
(2514) CRC checksum
(2515) Frame checksum
(2516) Closing flag
(26) DSiP command state flags
(27) DSiP command
(28) Initiator and/or Sender
(29) Target and/or Receiver
(30) Organization number
(31) Cloud
(32) ACK
(33) NAK
(34) Cost factor (in routing)
(35) Router congestion control
(36) DSiP service class
(37) Node-router traffic bandwidth limiting
(38) Keepalive messaging
(39) Multi-routing

### DETAILED DESCRIPTION

In the following, an example of an embodiment of the invention is described in detailed manner. The following example should not be considered to be restrictive. The example merely illustrates a variety of different features and aspects of an embodiment of the invention. In the example, the embodiment of the invention is called DSiP® (Distributed Systems intercommunication Protocol) merely to distinguish aspects of the embodiment from conventional solutions.

To a person skilled in the art, the following exemplary embodiments illustrate the model presented in this application whereby it is possible to design different methods and arrangements, which in obvious ways to the expert, utilize the inventive idea presented in this application.

### Building blocks of a DSiP system; Nodes and Routers

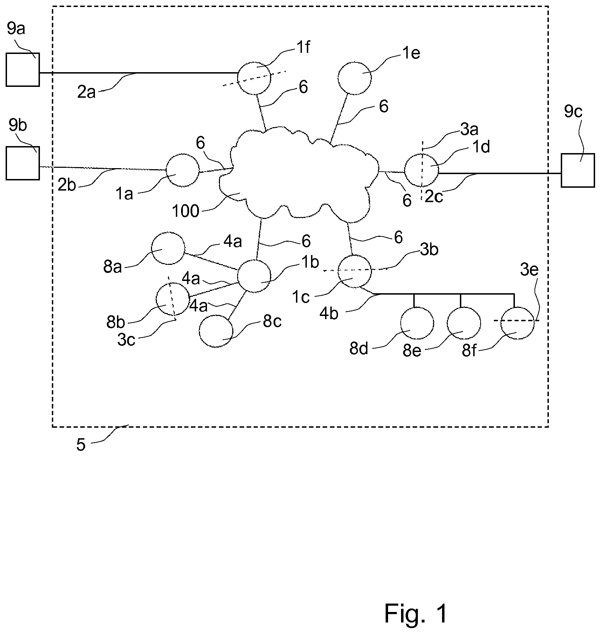

Please refer to figures 1, 2 and 3. A DSiP system 5 consists of two types of software modules: Routers 11 and Nodes 1 and 8. The DSiP system may also contain one or more additional objects such as Authentication server(s) 14, Configuration server(s) 7, Network management server(s) 12 and special nodes like Alarm node(s) 20 and Synchronization node(s) 19.

The number of nodes in a system is typically much higher than the number of routers. A node 1 may register sub-node(s) 8 to a router 11. A DSiP system may be amended with additional software modules such as the Network Management Server (12), Authentication Server 14 and Configuration Server 7. The aforementioned Server-modules 7, 12 and 14 are designed for providing a DSiP system with maintenance and support tools.

The routers are responsible for routing DSiP data packets 24 and/or 25 through the physical communications networks or links. The routers locations, for example 11a, 11b, 11c and 11d, determine the communication network topology. A DSiP system can be realized in any desired topology, forming a star, a tree structure, a trunk line etc. The selection of a topology is determined when studying the needs of the application.

The nodes may vary in both amount and type. The nodes constitute ending points in the DSiP system. A node 1 is typically responsible for interfacing to some real-world equipment, device and/or software 9a, 9b, 9c into the DSiP routing system (Fig. 1). A minimal meaningful DSiP network consists of one Router 11 and two Nodes 1.

Nodes 1 represent interfacing points to a DSiP routing network 100 (Fig. 1). The DSiP routing network comprises one or more interconnected DSiP router object(s) carrying DSiP messages between routers and nodes. A single node typically handles one logical task such as interfacing a circuit breaker 9a used in the power grid into DSiP. Another node interfaces an electrical substation 9b into DSiP whereas a third node connects a SCADA (Supervisory Control And Data Acquisition) system 9c with its user interfaces to the DSiP communications network and so on.

Nodes 1 and routers 11 communicate by sending and receiving DSiP packets 24 or DSiPS packets 25 in the DSiP network.

The DSiP system will remain intact and unchanged regardless of the type of interfaced objects (nodes) and regardless of the choice of communications media. What this actually means, is: The method of communication 2a, 2b, 2c, 6, 10 becomes irrelevant to the application and external equipment 9a, 9b, 9c. The physical way how data is transported from one part of the system to another part is not dictating the application. DSiP will see that the data gets delivered, one way or the other - literally. Communication can be regarded as an important but abstract layer.

### Node startup

When a node 1 starts, it should attempt to register (authenticate) itself to a router 11 over the node-router 6 connection(s).

When the node 1 has properly authenticated itself, the existence and location of the node 1 will automatically (dynamically) propagate from router 11 to router 11 over the router-router connections 10. The routers 11 dynamically keep track on nodes 1 and their connections 6. The routers "know" the locations and presence of nodes.

A node 1 should try to stay connected to a router 11 for as long as possible. An ideal state is that when a node 1 is properly authenticated, and connected to a router, it will remain connected forever.

A single node 1 may use multiple physical connection channels in order to establish a connection 6 to a router 11. The node-router connection 6 may physically be for example an IP network, a serial line connection such as RS232 and/or a multi-drop serial line such as RS485 and/or a radio modem connection and/or a Power Line Communication modem but not limited to these. The type of physical media is basically irrelevant as long as it is possible to transmit and receive bits of information from the node 1 to the router 11 and vice versa over the connection 6.

When a node 1 starts, it will attempt to make a connection to a router, for example 11a, according to instructions found in the node-configuration-file 21 and/or according to pre-defined (hard coded) instructions inside itself. The instructions contains detailed information on where and how to find the router 11a and/or 11b and/or 11c and so on. The instructions in the node-configuration-file 21 will be detailed enough so that a node may send and receive bits of information to a router over the node-router connection 6.

The node-configuration-file 21 may contain information such as baud-rates, radio- and PLC-modem frequencies and IP-addresses but not limited to this. The node-configuration-file 21 contains all necessary information on how to establish a physical link from the node to the router.

If the node 1 attempts to use IP networks to establish its node-router connection 6, the node-configuration-file 21 will typically contain the IP address of a router 11a and/or 11b and so on.

If the node 1 connects to a router using a serial line such as RS232, but not limited to it, the node-configuration-file 21 will contain adequate instructions for the node to do so. This also applies when a node attempts to use a radio modem, PLC modem or any other type of media.

The node-configuration-file 21 contains enough information for a node 1 to be able to send and receive data from and to a router 11.

A node 1 may establish several simultaneous connections 6 to a router 11 using a multitude of physical media. The node-router connections 6 may be of both IP and non-IP type.

If the node 1 is not able to establish a data connection 6 to its primary router, for example 11a, the node may attempt to establish a connection 6 to a secondary router, for example 11b and so on.

If the node 1 is unable to establish any node-router connections 6 it may attempt to establish a connection to a Configuration Server 7 in the same manner as it would be in case of a node-router connection 6.

The Configuration Server 7 may provide the node 1 with new routing and connection establishment information that the node may store in its respective node-configuration-file 21 and/or directly use in order to attempt new connections to router(s) as previously explained.

It is always the node 1 that establishes the connection to a router 11. A node 1 should not respond to inbound connection attempts.

### Node authentication

When a node 1 starts, it must try to establish a connection 6 with a router 11. The first data packet 24, 25 sent from a node must be an authentication request. In other words, the node must present itself to the router with proper credentials in the form of node number 2415, password 2421, optional name of the node 2421, cost factor 34, 2421, cloud 31, 2413, information etc.

A connection 6 from a node 1 to a router 11 is considered to be successful when the node has properly presented itself to the router by sending a correctly formulated DSiP packet 24 or a DSiPS packet 25 containing a AUTHENTICATE-request command 27 over the node-router 6 connection. The Target 2412 must be set to ROUTER_REGISTER, in other words, the receiver is the router.

The node 1 must present itself to the router with an authentication message 24, 25 containing its node number, its cloud membership, its organization membership and password.

The authentication request sent by the node 1 may be encrypted. The encryption is based on a default encryption key stored in the node configuration data 21 and router configuration data 18. Note that this method is preferred when the packet type is DSiPS 25.

If the node 1 connects to the router 11 over in IP network, the encryption method may be of SSL-type, for example but not limited to. SSL is an abbreviation for Secure Socket Layer.

Note that use of encryption is not mandatory. Use of encryption is the selection of the system designer. Encryption can be used on node-router connections 6 and/or router-router connections 10. Encryption can be used on all or selected connections.

When the node 1 has presented a correctly formulated encrypted authentication request packet 25 to the router 11, the router will respond by sending and indication of success or failure with an ACK 32 or NAK 33 packet 25. If the router 11 has indicated a success to the node 1, the router will immediately also send a session specific encryption key to the node 1. The node 1 must use this encryption key throughout its session.

The encryption key will be sent from the router 11 to the node 1 as an ENCRYPTION_KEY-command 27 where the payload 2421 will contain the key.

The node 1 must send an acknowledge success (ACK) packet 25 to the router indicating correct reception of the router ENCRYPTION_KEY. The ACK-packet 25 response must be encrypted with the session specific key sent by the router. The payload in the nodes ACK packet must contain the session specific encryption key used by the node 1.

As a result, the node and the router may use different session specific encryption keys in their communication.

If the node 1 does not acknowledge success (ACK), or if it does not reply to the router at all, the router will not accept this authentication attempt.

A node must have the same cloud membership as the router it tries to authenticate itself to, that is, the authenticating node and router must belong to the same cloud.

Every node in a DSiP system 5 must have a unique node-number and cloud-number combination.

A DSiP system may have two or more routers with different cloud numbers and the routers may be connected with the router-router connection. A node belonging to one cloud may have the same node-number as a node belonging to another cloud.

A properly authenticated node 1 will be a member of the DSiP system 5 and routing information on how, and where, the node can be accessed is passed by local router to neighboring routers. It may however, not have any implicit rights or privileges to control or access other nodes in the system since the other nodes may require further authorization or privileges.

An authenticated node has the right to send and receive DSiP 24 and/or DSiPS 25 packets and it has the right to query the router 11 what other nodes are visible to the router it has authenticated itself to.

An authenticated node may ask the router to provide a list of the router's known nodes and it may ask the router to provide the name for a specific node number. The router will reply with the name of the specific node number, provided that the specific node has earlier presented name information during its authentication.

It is worth noticing that the node names are used only as informative directives to a human user and not for routing purposes.

If a node 1 presents itself by with a correctly formulated DSiP 24 and/or DSiPS 25 message containing the AUTHENTICATE-command 27 and the router 11 does not recognize the node password, the router 11 may ask the Authentication Server 14 to provide authentication credentials for the node 1.

The router 11 will then verify that the node 1 has presented a correct password. If the password is correct, the authentication will be approved. If the password is incorrect, the router will reject the node's authentication request.

If the router is not configured for communicating with the Authentication Server 14 and the nodes password is incorrect, the node authentication will be rejected.

If a node has sent a correctly constructed authentication message 24, 25 to the router and set the DSiP command type flags 26 to request success/fail response from the router, the router will reply by sending an ACK 32 or NAK 33 message 24, 25 to the node depending on the success or failure of the authentication.

### Node privilege control

A node 1 may implement its own security measures in terms of requiring further credentials from another node trying to access it, or services from it. For example, when an Initiator 28 node attempts to command a Target 29 node, the target node may require that the initiator sends a CONTROL_GAIN type of command 24, 25 and a password as argument. If the target node is free, available, and accepts the CONTROL_GAIN request, it may allow further access from the initiator node.

If the target node is busy, occupied or already in some other nodes control, it may respond to the CONTROL_GAIN request by sending an NAK 33 packet 24, 25.

The concept of CONTROL_GAIN is useful for example, but not limited to, in cases where a user requests control of a CCTV-camera connected to the DSiP system 5. If all users could simultaneously access the camera, it would be difficult to use it - one user turns the camera left, another right. If the node implements requirement for CONTROL_GAIN, there would be only one user operating the camera at a time. The initiator node may send a CONTROL_GAIN request to the target node. The target node may reply with success of fail messages if the initiator node has requested feedback in the DSiP command type flags 26.

In cases where one node has obtained control over another node via the CONTROL_GAIN mechanism, another node may (if the target node has implemented support for the command) issue a CONTROL_OVERRIDE command.

The override command 24, 25 can be used for overriding the original (node) user by another (node) user with higher rank. When an initiator 28 node stops using/controlling a target 29 node, it sends a CONTROL_RELEASE command to the target. When the target node receives the CONTROL_RELEASE command, it may allow other nodes to send CONTROL_GAIN commands to itself.

### Node-router connection

As previously described, a node 1 should attempt to authenticate and register itself to a router 11 as soon as possible when it starts. The node should try to maintain the connection to the router as permanently as possible in order to avoid unnecessary network topology changes propagate throughout the DSiP system. Note that, each time a node authenticates itself or disconnects from a router it will result in a change in the router's routing table and new routing information will propagate from the router to neighboring routers with the same cloud number.

A node 1 authenticating and connecting 6 itself to a specific router 11 is called a local node from the specific router's point of view.

The physical means for connecting a node 1 to a router 11 is not relevant as long as the node 1 and router 11 can communicate with each other by sending and receiving bits of information formulated as complete DSiP 24 or DSiPS 25 packets.

### Node-router traffic bandwidth limiting

The router 11 may implement bandwidth control in the node-router 6 connection in terms of bits per second.

When, for example, a node has authenticated itself to a router, the router may allow the node to send data with a certain maximum speed as set in the router configuration data 18.

As all data transmission in the DSiP system is packet oriented, the nodes and routers will arbitrate on a packet 24, 25 and not byte-level.

Lower level transmission protocols outside the scope of DSiP, may arbitrate on byte-level.

Nodes and routers should attempt to create their physical interconnections in a blocking mode. This applies to all physical communication channels 6 between nodes and routers and routers to routers 10.

The blocking mode term refers to a mechanism in general where a packet sender and a packet receiver are interlocked in a particular way: When the receiver reads its input it will drain the senders output which means that the sender cannot send data packets with a faster pace than what the receiver reads them.

Physical handshake mechanisms between the node and the router handle physical data flow. For example, if the node-router connection 6 is realized by a local area network and the used data transmission protocol is TCP/IP, the node to router connection should be realized in TCP blocking mode. The same applies to router-router connections 10.

As the node-router connection 6 should operate in blocking mode, the router can easily moderate the amount of data 24, 25 sent by a node to the router e.g. bandwidth, as the bandwidth is directly related to how rapidly the router 11 reads the data 24, 25 from its input.

The node 1 may implement the same functionality. The data 24, 25 bandwidth from the router to the node can be limited according to how rapidly the node reads data 24, 25 from its input.

It is the physical transport protocol layers responsibility in general to implement handshaking mechanisms between the elements in the DSiP system 5 in such a way that blocking mode is realized between the elements.

The router configuration data 18 may contain data bandwidth limit settings in terms of bits per second for each node connected 6 to the router 11. The bandwidth limit setting affects the bandwidth in terms of average bits per second a node may transmit data 24, 25 to a router.

For example, the router configuration data 18 may contain a directive for allowing a data bandwidth from a node to the router to be for example limited to an average of 100 kilobits / second.

The mechanism described in the previous may also apply on the data bandwidth in the direction from the router to its local node.

### Multiple simultaneous node-router connections

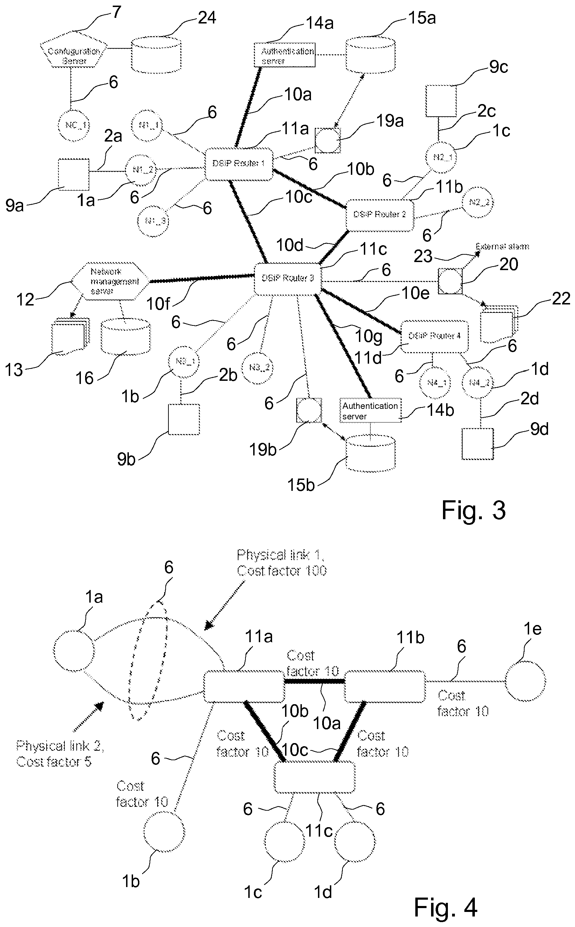

As previously explained, a node should attempt making a connection 6 to the router 11 as soon as the node 1 starts. A node may, however, create multiple physical connections to a router. See figure 4.

For example, assume that a node 1a authenticates itself successfully to a router 11a via a specific physical link 1. The first node-router connection is called the primary connection.

The same node 1a may send an authentication request to the router 11a via another physical link 2, called the secondary connection.

As node 1a already exist in the router's routing table after the first authentication and link-1 creation, the router needs to verify that the authentication request for link-2 is valid. Remember that two separate nodes 1 using same node number 2415 and cloud identifier 2413 may not exist in DSiP routing.

The router 11a will test the validity of the second authentication request from node 1a by sending a probe message 24, 25 to the node 1a via the first physical link 1.

Node 1a must reply by returning the same probe-message 24, 25 to the router 11a via the second physical link 2. In short, the router sends a probe-message 24, 25 via link 1 to the node, the node must respond with a loopback via link 2. If the response is valid, that is, the sent and received probe messages are equal, the second link to the node 1a will be accepted (figure 4.).

The probe-message 24, 25 has the command 27 NODE_PROBE and the data section 2421 of the message contains randomly generated message identifier.

Different physical links from a node 1 may be associated with different cost factors 34. For example, figure 4, the physical link 1 has a cost factor 34 of value 100 and the physical link 2 has a cost factor value 5.

The nodes 1 physical link factors are/is stored in the node configuration data 21.

A node may connect with a configuration server 7, if one exists in the DSiP system 5, for retrieving new node configuration data 21. The new configuration data may contain new cost factors 34 for the node 1 connections.

After a successful authentication and connection over a specific physical link, the node 1 may report a link cost factor 34 either in its authentication request packet 24, 25 or by specifically sending a LINK_COST-packet 24, 25 to the router 11 via the specific physical link.

This method informs the local router 11 of each individual physical links costs to the node 1. The node 1 will send a LINK_COST-packet 24, 25 to the router 11 over the specific link, with the target address 2412 set to ROUTER_REGISTER and the data section of the packet 2421 containing the cost factor 34 for this link. Upon receiving the LINK_COST-packet, the router registers the cost factor for the nodes 1 specific physical link, and uses it in consequent routing.

This mechanism described above, is the only place where a node 1 can affect the cost factor 34 for a route. All other cost factors 34 are set, reset, and changed by the router 11.

The router 11 reports the lowest link cost factor 34 to its neighbors upon each node 1 authentication. If a node 1 authenticates many physical connections, the connection with the lowest cost factor will be used by, and preferred by the router 11 and reported in the routing parameter exchange to other neighboring routers.

The lowest reported link cost factor will be used by the other routers in the DSiP system 5 routing.

If for example a node 1a in figure 4, connects with physical links 1 and 2, with cost factors 100 and 5 respectively, the router 11 reports a cost factor of 5 when updating routing information.

The router 11 will prefer the link with the lowest cost factor to the node. In figure 4, the routing from the router to the node, and vice versa, will default to link number 2 having the lowest cost factor.

The node may change its cost factors for its physical links towards the router. It may report this to the router which will report the new lowest cost factor to its neighbors.

### Parallel node-router communication

A node 1 that connects over multiple physical links to a router 11, for example node 1a in figure 4, may report equal cost factors values for all its physical connections.

If the nodes physical link cost factors are equal, the router may simultaneously use both physical links 1 and 2, as in figure 4, for communication with the node 1a. If the cost factors for the physical links would differ, the router would prefer the connection with the lowest cost factor.

For example, if the router 11a in figure 4, has to transmit a stream of packets 24, 25 to the node 1a and if the cost factors would be the same for physical link 1 and 2, the router may try to use both links simultaneously in order to maximize throughput.

An exact parallelism in the time domain, between the physical links and packets traversing through them, is not guaranteed by the router. The timing between packets 24, 25 sent over physical link 1 and physical link 2 is not guaranteed to be in a constant relationship.

Each physical link connected to the router, is associated with an output buffer in the router. The router determines the quality of the physical links by monitoring its output buffer status and drainage.

If all output buffers in the router drain equally, the router may determine that the physical links have equal capacity in terms of bandwidth. Thus, if the physical links have all the same cost factor 34 values and if the router detects that both physical communications have equal performance in terms of bandwidth, the router may decide to send every second packet 24, 25 over physical link 1 and every second packet over physical link 2 in order to maximize throughput.

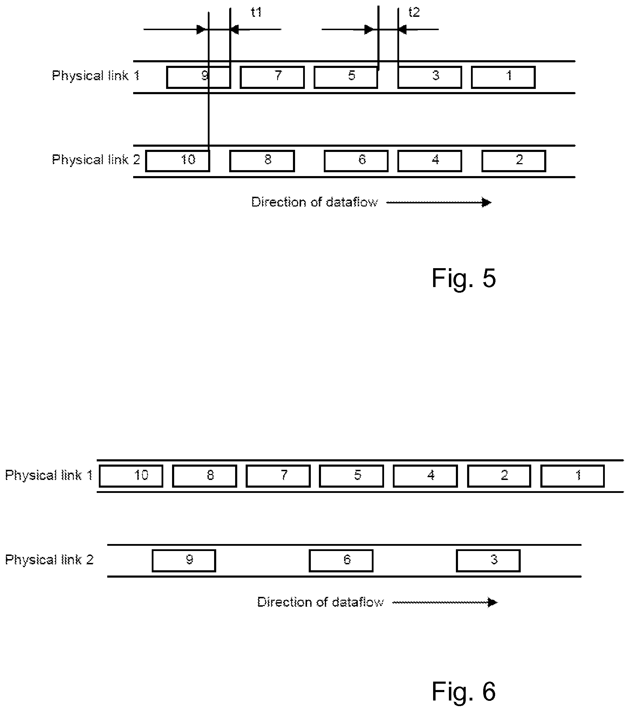

Figure 5 illustrates evenly distributed packets over multiple physical node-router links. A router 11 sends a stream of packets 24, 25 distributed over two physical links, 1 and 2. The router 11 cannot guarantee that data flow in the physical links are exactly synchronized, which may result in fluctuations in the packet arrival time at the node 1. The time [t1] may vary. Also, the packets may have fluctuations in the inter-packet delay time [t2]. It must also be noted that the packets 24, 25 may be of different size which affects the timing in the physical links.

If the physical links have different performance characteristics in terms of, for example, bandwidth, the router may decide how to distribute the packets over the physical links. The router may, for example, send two packets over physical link 1 and then one packet over physical link 2, then two packets over physical link 1 again, and so on. See figure 6.

Figure 6 illustrates un-evenly distributed packets over multiple physical node-router links. It is the receiving node's 1 responsibility to assemble the packets 24, 25 in the right order, if it's of relevance. The DSiP packets 24, 25 contain a message ID 2418 number which can be used for sorting packets in order.

### Sub-nodes

When a node 1 has successfully authenticated itself to a router, it may attempt to register sub-nodes 8. A node registering, or authenticating, sub-nodes is called master-node.

A master-node that has authenticated/registered sub-nodes is responsible for acting as a routing gateway between its local router and the sub-nodes. Sub-nodes must follow exactly the same rules as nodes in general. The only difference is that sub-nodes do not make a direct physical connection with the router.

Instead, all sub-node communication with the router will pass through the master-node. As the master-node registers sub-nodes, it inherently means that, when and if, the master-node disconnects from the router, the subnodes will be disconnect too. A master-node 1 acts as a gateway between the router 11 and its sub-nodes 8.

Sub-nodes connect to the master-node via a sub-node-master-node connection 4. A sub-node may use any organization number which is allowed for use with the master-node. A sub-node must have the same cloud 31 number as the master-node.

The master-node authenticates its sub-nodes by sending an AUTHENTICATE_NAMED_LIST command 27 to the router 11. The router responds with ACK/NAK message 24, 25 containing information in the packet 24, 25 data section 2421 about which sub-nodes where authenticated successfully and which failed.

If the router configuration data 18 allows it, a sub-node may register its own sub-nodes.

Sub-nodes may be useful for example, but not limited to, in an application where one physical device or equipment has many sub-devices or subequipment, and the user of the DSiP system 5 wants to easily differentiate data and communication of the sub-devices from each other. An example of using sub-nodes could be, but not limited to, automatic utility meter applications used within the energy sector.

A master-node could be placed in a central position, for example at a low voltage sub-station within the power distribution grid. Sub-nodes may be placed at utility meters distributed inside the low voltage section of the power grid. Physical communication between the sub-nodes and the master-node could be realized using Power Line Communication modem technology.

The sub-nodes could automatically read power consumption values from the utility meters and then send the measurements to the master-node over the power distribution cables, using PLC modems. The master-node could act a as centralized hub for the utility meters, communicating with the router 11.

Thus, using the master-node/sub-node concept would be a logical solution.

### Router startup

A DSiP system 5 must have at least one router 11 in order to function. The router 11 is responsible for routing DSiP packets 24, 25 from a source/initiator 28 node to the destination/target 29 node according to routing parameters and directives found in the router configuration data 18.

When the router 11 starts, it will read its router configuration data 18 containing initialization parameters. The router configuration data 18 contains information and directives for the router such as, but not limited to, which IP-address, or addresses and port or ports the router should expect inbound node connection attempts from and serial port parameters such as, but limited to, baud rate, word length and parity etc. The router configuration data 18 also contains authentication data for the nodes 1 that may attempt a connection to it. When a node creates its node-router connection 6 to the router and sends its AUTHENTICATION-request command 27 to the router, the router compares the presented authentication data sent from the node with the settings in the router configuration data 18. If the authentication data match with the nodes authentication request, the node-connection is accepted.

The router will passively wait for node connection attempts at the router's predefined communication channels. The router will never attempt to establish communication links towards the node as it is the nodes responsibility to initiate communication.

The router configuration data 18 may contain directives for the router on where and how it can locate its neighboring router. A router may have none, one or multiple neighbor connections. For example, see Fig 3, a router 11a may be connected to two other routers 11b and 11c via the router-router connections 10b and 10c respectively.

If the router 11a configuration data 18 contains a directive that the router 11b is neighbor for router 11a, the router 11a will actively attempt to authenticate and present itself to the router 11b by formulating a DSiP 24 and or DSiPS 25 packet containing a AUTHENTICATE-command 27 with the Target 29 address set to ROUTER_CONTROL. The authentication DSiP 24 and/or DSiPS 25 packets must also contain a correct password. The router 11a will not present itself to the router 11c using the connection 10c if the router 11a is not configured to have router 11c as neighbor.

Any router may have one, multiple or no neighbors.

A situation where router 11a is defined to have router 11b as its neighbor and router 11b is defined to have router 11a as its neighbor, is illegal. A router's 11 neighbor parameter in the router configuration data 18 indicates to which other router 11 it shall actively attempt to create the router-router connection 10 to. In other words, the neighbor parameter indicates the direction of router-router 10 connection establishment.

A specific router 11, into which a specific node 1 has authenticated and connected itself 6 to, is called a local router from the specific nodes point of view.

### The Cloud concept

In addition to containing node authentication information and inbound connection channel parameters, the router configuration data 18 must contain a setting called CLOUD 31. The cloud-setting is a delimiter affecting the behavior of how dynamic routing information propagates throughout the DSiP system 5. One router can belong only to one cloud.

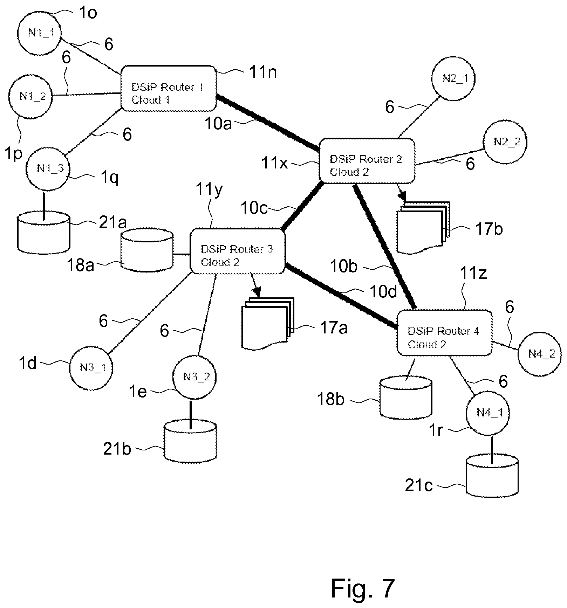

Routers 11 that belong to the same cloud, that is, having the same cloud number, dynamically and constantly share routing information between themselves in a DSiP system 5. In other words, the network and routing topology is constantly and dynamically updated between routers in one cloud, when nodes authenticate and connect or disconnect to routers. A gateway connection 10a can exist between routers belonging to different clouds. See figure 7.

Referring to figure 7, for example, node 1o may have authenticated itself to router 11n. Node 10 and router 11n belong to cloud number 1. The nodes 1d and 1e have authenticated themselves to router 11y and node 1r has authenticated itself to router 11z, all elements belonging to cloud number 2.

If, for example, node 1r disconnects from its router, the routers 11x, 11y and 11z will automatically and dynamically update their routing tables by removing the routing information regarding node 1r. However, router 11n will not receive the routing information change and thus, it will not know whether node 1r is present or not in the DSiP system until, for example node 1p sends a DSiP packet 24, 25 with Target 29 address set for node 1r.

A router belonging to one cloud, for example 11n cloud 1, may establish a neighbor connection 10 to another router 11x belonging to another cloud number 2. The routers in cloud 2 11x, 11y and 11z will share the information among themselves, that router 11x acts as gateway for cloud number 2 to cloud number 1.

Therefore, when node 1r sends a packet 24, 25 to node 10 situated in another cloud, the router 11z will see that the packet gets transported to the gateway router 11x either directly over connection 10b or then via router 11y, depending on routing parameters set in the router's configuration data 18. Upon receiving the node 1r packet, the router 11x sends the packet over the connection 10a and the router 11n delivers it to node 1o.

If, for some reason, node 10 is disconnected, the router 11n will respond to router 11x with a DSiP message 24, 25 containing the information NO ROUTE, indicating router 11n is unable to deliver the message to node 10 because it is not available in the router 11n routing table. Hence, the router 11x will respond to node 1r with the same message.

If the message can be delivered successfully from node 1r to node 1o over the router 11n, 11x gateway connection, the initiating node 1r may request the node 1o to respond by setting the appropriate DSiP command type flags 26 in the message.

The purpose of the cloud 31 concept is to limit the amount of routing information packets traversing through DSiP systems 5 and allow for segmenting and group nodes into useful groups.

### DSiP System topology

The system architect/designer will decide the topology of the DSiP system 5 according to the best layout suitable for an application. The topology is determined by selecting the desired amount of routers 11 and defining and setting the routers neighbor connections. The DSiP system 5 routing topology can form a star, a circle, a segment or any combination of these.

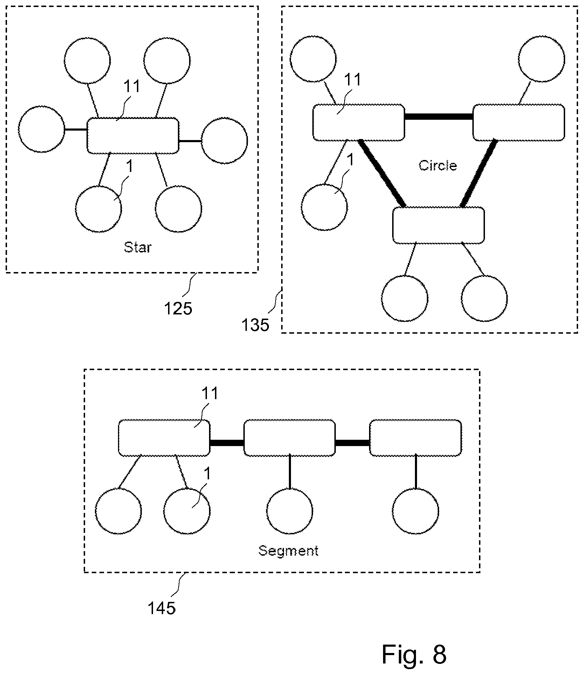

See figure 8.

A node 1 may try to authenticate itself to one or more routers 11, one router at a time, until an authentication request is granted by the router. The node authentication behavior can be determined by settings in the node configuration data 21 or it can also, if needed be hard-coded in the node program. In case a node fails on all attempts to authenticate itself to a router, it may try authenticating itself to a Configuration Server 7 which may provide the node with new connection instructions.

### Routing

When a DSiP system 5 is created, the system administrator or designer decides the topology of the routing solution. The administrator may decide to use many different types of physical communications media when setting up the connection links 10 between routers 11. The links may be of different quality in terms of bandwidth and latency and/or may be of different expense in terms of money. The shortest distance between two communication points may not necessarily be of the lowest cost in terms of money.

The system administrator will assign each connection 6, 10 with a default cost factor 34. The default cost factor expresses the system administrator opinion about the various connections in the DSiP system 5. A higher cost factor indicates a less fortunate route over the various connections 6, 10 in a DSiP system 5. The words "less fortunate" in the previous sentence may mean poor bandwidth, high latency or high cost in terms of finances etc. - The system administrator decides what factors he/she will take into account when deciding what cost factor to assign for a particular physical link.

After deciding the system topology, as often influenced by the real world and the application, the system administrator will edit/modify the router configuration data 18 according to his/hers decisions regarding the intended application, costs, bandwidth and overall efficiency.

The administrator will assign a default cost factor 34 related to each link between nodes/routers 6 and routers/routers 10 and store this information in the router configuration data 18 and/or node configuration data 21 and/or configuration server data 24 depending on the system 5 layout.

When the router 11 starts, it will read its configuration data 18 initialize its connections, presenting and authenticating itself to its neighboring routers. The cost factor 34 guide the routers 11 to send data 24, 25 using the route with the lowest cost factor 34.

Routers 11 will route physical data 24, 25 based on a dynamically self-learning routing table residing inside each router.

The router 11 uses an internal routing table with entries for each possible route to a node 1.

A router is given its neighboring routers address information at start-up and the interconnected 10 routers will then dynamically share location/connection/routing cost factors etc.) information regarding node(s) 1 at start-up. Routing of data 24, 25 is affected by the neighbor connections 10 and cost factors 34.

A router 11 accepting authentication from a node 1 will make an internal entry into its internal routing table. In other words; a router 11 dynamically updates its routing table with information on how to reach the node 1.

Routers keep track on all nodes signing on and off, that is authenticating and/or disconnecting, sharing this information with their neighboring routers - the network topology is continuously maintained on-line this way.

A router may also report any unsuccessful login attempts, among other abnormalities, to a special alarm node 20.

A system 5 may also have a Network Management server 12 which keeps track and logs information about connections throughout a DSiP system, in addition to other tasks it performs.

Routing information is only shared between routers belonging to the same cloud 31.

A DSiP system 5 does not rely on, or need to use, DNS (Domain Name System) services in order to route information. Similarly, for information, DSiP does not take any standpoint regarding IPv4 or IPv6 - as long as it is possible to transfer and receive bits of information between nodes and routers, DSiP will work.

Routers 11 use a cost factor 34 to determine the best way for routing. As previously said, the system administrator sets the default cost factors when installing a router 11 or node 1.

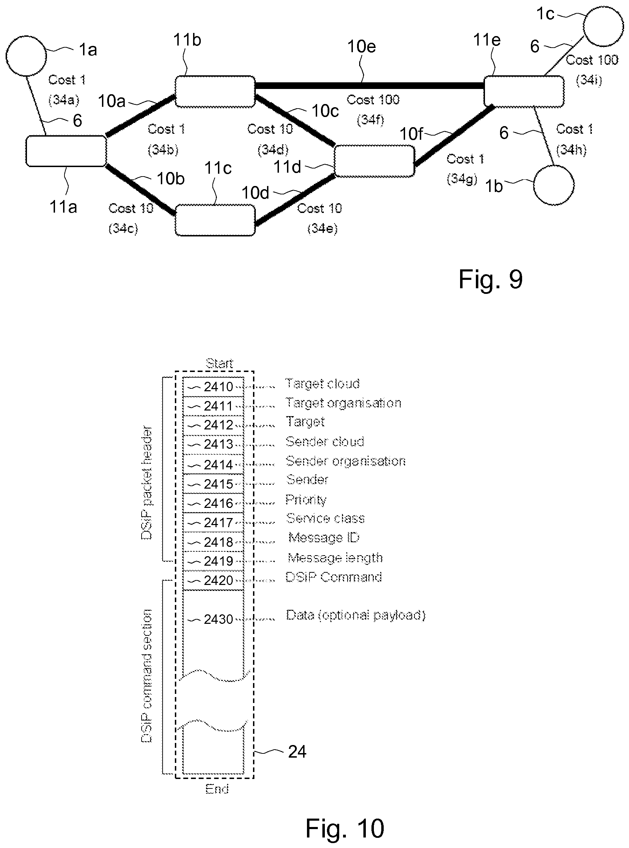

Referring to figure 9, for example, when a node 1a desires to communicate with a node 1b, it will send a packet 24, 25 to the first router 11a which will determine the most efficient way, expressed as the "lowest cost", that is, cost factor 34, to node 1b.

The most efficient way from node 1a to node 1b is through the links 10a, 10c and 10f with a calculated cost equaling 14 units. The shortest route, however more expensive, is the route over links 10a and 10e with the cost of 103. The shortest connection is not necessarily the most cost efficient route. The reason why link 10e is set to have a high cost factor can, for example, be due to expensive data communication costs in terms of money for this particular link.

If a router 11 is able to create two or more connections (routes) to other routers 11 with equal cost factors 34, the router will evaluate the number of connection hops to the preferred route. Routes may have equal cost factors 34 but different number of physical connection links. A connection link is referred to as a hop.

If two or more routes with equal cost factors 34 and equal hop counts exist, the preferred route, or default route, will be the route or connection that was first created.

For example and referring to figure 9, when a router 11e gets a packet 24, 25 from a node 1c, it will first read the header of the packet in order to resolve the target address 2412.

If the target address indicates the local node 1b as a receiver, the router 11e looks for connections 6 with the lowest cost to node 1b and then sends the packet to the node.

If the target address points to node 1a, the router 11e evaluates its internal routing table looking for the route with the lowest cost factor to node 1a. The router 11e will find two routes 10e and 10f to the node 1a.

The route 10f will have the lowest cost factor, being 13, therefore router 11e sends the packet 24, 25 to router 11d.

The router 11d will resolve the target address to the node 1a via routes 10c, 10d and 10f, where route 10c has the lowest cost factor of 12 to the node 1a. The packet will be sent to router 11b.

Router 11b will resolve the target address to node 1a via routes 10a, 10c and 10e, where route 10a has the lowest cost factor of 2. Therefore router 11b sends the packet to router 11a which will deliver the packet to the node 1a according to the logic described above.

A node 1 may attempt to send data to another node which previously has been correctly authenticated but, for some reason has disconnected itself. If the receiver is unavailable in the router's internal routing table, the router will immediately reply to the local sender node with a NO_ROUTE packet. The sender information is set to ROUTER.

### Cost factor

The cost factor 34 is the sum of individual costs factors between two end points, or peers, in the DSiP system 5. See figure 9. The cost factor 34 is a routing directive for the router. The routers will route data according to the lowest cost factor and hop count between two points.

The system administrator sets the default cost factors during installation and the default cost factor values are solely decided by the administrator.

Cost factors 34 can also exist in connections 6 between local nodes and a router. For example, referring to figure 9, a local node 1c connecting to a router 11e may present itself over an expensive and low performance connection 6 and thus have a high cost factor 34i. Another local node 1b may present itself to its router 11e over another type of connection 6 with a very low cost factor 34h.

Since a single node 1 may use multiple physical connections 6 as node-router connections, the node 1 may present to a router 11 a cost factor 34 for each individual physical connection it successfully is able to authenticate and present.

For example, a node 1 may connect 6 to the router using an expensive, high latency and low capacity satellite connection as one physical path. The same node may simultaneously also connect to the router using a high speed, low cost, low latency fiber connection. In both cases, satellite and fiber, the node may present a high cost factor 34 for the satellite connection and a low cost factor 34 for the fiber connection. The router will select, and prefer to use, the physical communication channel to the node, based on the lowest cost factor.

### Mechanism for dynamically changing Cost factors

Dynamic changes in the cost factors of the routers and nodes may occur in a DSiP system 5.

The cost factor 34 for a route cannot be lower than what has initially been set as default values in the router configuration data 18 and/or node configuration data 21 and/or configuration server data 24.

A cost factor 34 value may increase during operation of the system 5 and it may decrease, reaching the initial default value setting, depending on how physical connections operate.

Cost factors 34 related to node-router 6 connections may dynamically vary according to the same mechanism as in a router-router 10 connection.

Each router 11 has an output buffer associated with each physical output communication media link used by the router. This means that a router will have an output buffer for every neighbor connection 10 and for each physical link to each local node 6 and so on.

When the router 11 attempts to send a packet 24, 25 to either a neighboring router or a local node, the router will eventually place the packet in its outbound transmit queue, that is output buffer associated with the physical link .

Each output buffer transmit queue can hold a certain number of packets 24, 25. Each time the router places a packet in the output queue, the buffer will increase, or in other terms, fill. Each time a packet gets transmitted over the physical media, the respective output buffer, or queue, will decrease, or in other terms, drain.

The router has an internal programmed logic that constantly monitors the levels in each output buffer. If an output buffer, or in other terms output queue, fills over a certain limit, the router may increase the cost factor 34 for this connection.

The internal programmed logic can correlate the output buffer level with a cost factor 34 value. The more the output queue fills the higher cost factor. At certain output queue fill-level percentage, the router 11 will communicate to all its inbound connections, that is, to other inbound routers 10 that its output or outputs has increased cost factor(s) 34. The increased cost factors acts as routing directives for the other routers in a system resulting in changed routing decisions in the other routers.

The new cost factor 34 value(s) for one or more physical links or connections will propagate through the DSiP system 5 within the cloud perimeter.

When, and if, a router's output buffer, or queue, drains to normal fill level, the router will send a lowered cost factor 34 value to its neighbor routers over the router-router connections 10.

The router may not set cost factors 34 with values less than the default values set by the system administrator.

### DSiP service class

A DSiP packet 24, 25 contains an entry called Service class 2417.

The purpose of the Service class concept 36 is to limit the amount of transferred packets in a DSiP system 5 when the routing cost factor 34 changes.

Each Service class 2417 may be associated with individual cost factor 34 levels.

The router 11 will attempt to route a packet 24, 25 from sender/initiator 28 to receiver/target 29 and vice versa, if the cost factor 34 associated with the packets 24, 25 service class 2417 setting, is larger or equal to the actual cost factor of the route.

For example, the system administrator may have assigned service class 36 number 33 with a cost factor value of 50. He may also have assigned service class number 11 with a cost factor value of 100.

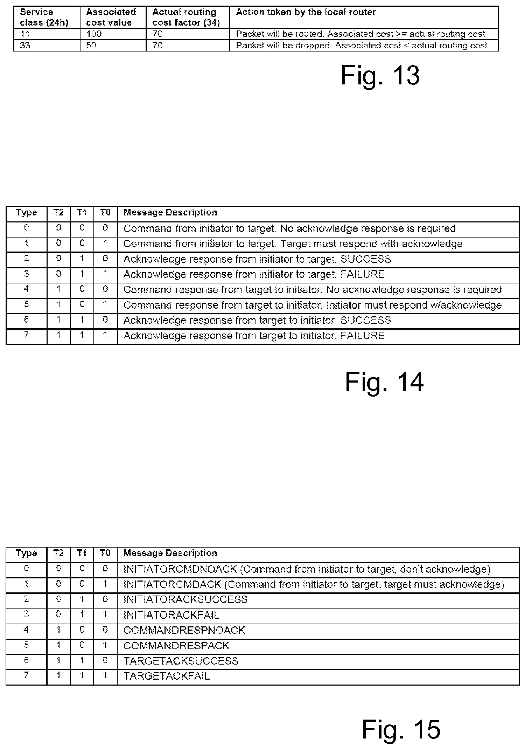

If a node 1 attempts to send a packet 24, 25 to another node and the route between the nodes has an actual cost factor sum of 70, packets with service class number 11 will be routed from end to end, whereas packets with service class number 33 will be dropped and discarded by the local router 11. The action can be expressed in the table of figure 13.

In case the router drops the packet, the local router will inform its local node of this by sending a NAK packet 24, 25 to the local node. The sender field 2415 is set to ROUTER and the data section 2421 contains the information PACKET_DROPPED_BY_ROUTER with a further clarification stating the the packet was dropped due to a cost factor issue.

Since this response will be generated from the local router 11, the overall network will not be loaded by NAK-messages 24, 25 indicating dropped packets, as they are sent by the local router to the node. The nodes packets 24, 25 will not either traverse through the DSiP system 5 because the local router 11 will drop them.

### Mapping of IP DSCP and ECN fields to service class & priority

The IP protocol (Internet Protocol) header contains a field called *Differentiated Service Code Point* (DSCP). This field was previously called Type of Service (TOS). The IP header also contains a field called *Explicit Congestion Notification* (ECN).

The purpose of the DSCP field in the IP protocol packet header is to provide a simple, scalable and coarse-grained mechanism for classifying, managing network traffic and providing Quality of Service (QoS).

The purpose of the IP ECN field is to provide an end-to-end notification of network congestion without dropping packets. ECN is an optional feature that is only used when both endpoints support it and are willing to use it. It is only effective when supported by the underlying network.

A DSiP node 1 acting as a gateway node, that is, acting as a transparent IP-traffic interface between external equipment, devices and software 9 and the DSiP system 5 may map the external equipments 9 IP packets DSCP and ECN fields to certain DSiP service class 36 and DSiP priority 2416 values.

The aforementioned means that it is possible to affect the DSiP routing behavior by altering the external IP packets DSCP and ECN fields. For example, but not limited to, an external computer 9 may be connected to the DSiP system 5 via a gateway node 1. The computer may run a web browser and while doing so, the computer might have a certain setting for its IP packets DSCP and ECN fields. The DSiP gateway node 1 may detect the IP packets DSCP and ECN field settings and set the DSiP service class 36 and DSiP priority 2416 accordingly - The DSCP and ECN fields can be mapped to the aforementioned service class and priority fields according to settings in the node configuration data 21.

Effectively, the aforementioned means that it is possible to affect the behavior of DSiP routing and what kind of packets will be transported through the DSiP system 5 from, for example but not limited to, an external computer 9 provided that the DSiP gateway node 1 has been parameterized for using the DSCP/ECN service class/priority mapping function.

The aforementioned mechanism allows for filtering and classification of IP traffic in general. Important data can be allowed to be transported over all kinds of connections according to the DSiP service class 36 and cost factor 34 settings.

The DSiP mapping of the DSCP and ECN fields is set by the system administrator and stored in the node configuration data 21.

### Multi-route functionality

A DSiP data packet 24, 25 can be addressed to one or more recipients at a time.

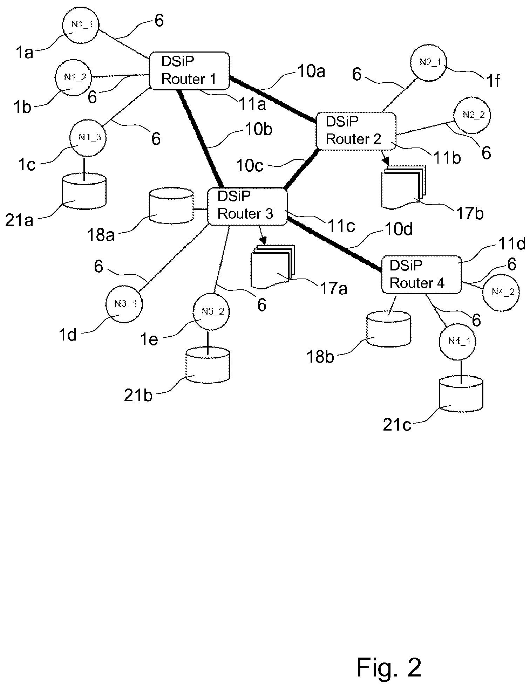

Referring to figure 2, a single node 1f acting as sender, may address its packets 24, 25 to several recipients/targets at the same time, in this example to nodes 1a, 1b and 1c.

The multi-recipient addressing mechanism is called Multi-route. The purpose of this mechanism is to avoid sending redundant data in a DSiP system.

Multi-route means effectively; one node can send packets to several recipients at the same time, the router makes copies of the packet when it detects that a recipient node, that is target, is a local node.

If, for example node 1f act as a source for a video stream and there are several users viewing the video for example at the nodes 1a, 1b and 1c, the video stream will be sent from node 1f to router 11b in multi-route 39 format. The multi-route format means that the packet 24, 25 containing the video stream and sent from node 1f will have 3 recipients listed in the data section 2421 of the packet. The packet 24, 25 packet header target field 2412 must be set to DSIP_ROUTER_MULTIROUTE. The packet sent from 1f to router 11b is delivered to router 11a which will deliver each node 1a, 1b and 1c with a copy of the packet according to the distribution list in the packets 24, 25 data section 2421.

When a router 11 receives a packet 24 25, it will check the packets target address field 2412. If the target address equals DSIP_ROUTER_MULTIROUTE, the router will read the packets data section 2421 to get the addresses of the nodes who will be receivers of this packet. If a node address is found and the node is a local node to this router, the router makes a copy of the packet and sets the target address field 2412 to be equal to the local node and finally sends it to the local node. The router will then modify the original multi-route packets address list by removing the local nodes address from the receiver list. When this is done, the router forwards the multi-route packet to the next router in the routing topology, who will act the same way until all nodes in the multi-route packets receiver list have received their copy of the packet.

### DSiP organization number

All nodes 1 in a DSiP system 5 must belong to one or more organizations. A DSiP organization is a parameter that nodes may use for delimiting access and communication. A node 1 may belong to several organizations.

The system administrator or creator of a DSiP system 5 may assign organization numbers to nodes. The organization information is stored in the router configuration data 18 and the node configuration data 21.

A node 1 must use the organization numbers it has been given. Nodes 1 belonging to one organization, may send packets 24, 25 to nodes that belong to another organization than itself. It is purely up to the receiving node to determine whether it will reply or not, regardless of the DSiP command state flags 26.

If a node A belongs to organization 10, for example, sends a packet 24, 25 to another node B that belongs to organization 20, for example, it is solely up to node B to determine if it will comply and reply or not.

A node cannot fake its own organization number(s). If a node A belonging only to organization 10 sends a packet 24, 25 and tries to forge its own organization number by setting it for example to 11, the packet will be dropped by the local router 11. The router dropping the packet due to a forged organization number will not alert the sender node or reply to the sender node that the packet was dropped. A node trying to fake its organization number will be excluded from the DSiP system 5.

The DSiP packet 24, 25 contains an entry called Target organization 2411 which indicates the receiving nodes organization. The packet also contains an entry called Sender organization 2414 indicating the sender node organization.

The sender organization number 2414 is checked by the router.

### Router configuration data and Node configuration data

Configuration settings, containing basic routing information is created by the system administrator during the DSiP system software installation.

When a DSiP system 5 is created, the router configuration data 18 and node configuration data 21 must match in such a way, that the node 1 will know how, and where to find a router 11 in order to connect and authenticate itself.

If a node 1 is for example, but not limited to, connected to a router 11 over an IP network, the node 1 must have the router's IP-address and port number in its configuration data 21 so that the node can formulate a DSiP packet 24 and send it to the router over the IP network.

Accordingly, the router's configuration data 18 must contain information to the router that it shall listen for inbound data traffic at its network interface at a certain port. When the router receives an IP packet containing a correctly formulated DSiP packet 24, it will begin processing the packet according to the DSiP system rules.

The router and node configuration data 18, 21 shall in most cases be represented as configuration files in a computer system.

Note that all the configuration data for routers 18, nodes 21, authentication servers 15, network management servers 16 and configuration servers 24 may be strongly encrypted too.

### Router congestion control

In addition to the dynamically changing cost factor 34, the router may use flow control mechanisms for preventing a single node 1 from transmitting un-desired amount of data 24, 25 packets.

Referring to figure 3, for example a node 1a which is connected to router 11a may send a large amount of packets 24, 25 to a receiving node 1d which is connected to router 11d.

The node 1d may for example be unable to process all incoming packets which will eventually leads to router 11d output buffer, or queue, growing. At a certain point, the router 11d output queue will grow over a threshold level set in the router configuration data 18. The threshold level is called the XOFF-level, or transmit-OFF, level for a specific router 11.

When the router 11d output buffer triggers the XOFF, the router 11d will send the XOFF-information to all other routers it is connected to. Referring to figure 3, the router 11d sends XOFF-information to router 11c, which again, will send XOFF-information to routers 11b and 11a.

The XOFF-data sent by router 11d to the other routers, contains the information that node 1d is unable at the moment to read further packets 24, 25 and therefore all routers in the system, except router 11d, are prohibited to send any data to node 1d - all data transmission to node 1d from the other routers will pause until the condition is cleared.

If for example, referring to figure 3, the node 1d is unable to receive packets and the router 11d has one or more packets 24, 25 with node 1d as destination address, the router 11d will try for a certain time to deliver the packets to the node 1d. If router 11d can't deliver the packets within the timeout value, the packets will be dropped.

In case the router, for example router 11d, drops the packet, the router will inform the sender node, in this case node 1a, of this event, by sending a NAK packet 24, 25 to the sender node. The sender field 2415 is set to ROUTER and the data section 2421 contains the information PACKET_DROPPED_BY_ROUTER with a further clarification stating the packet was dropped due to XOFF timeout reasons.

This response will be generated from the last router in the transmission chain and sent to the node the packets came from. If for example node 1d is reported to be in XOFF-state and node 1a is regardless of this, trying to send packets to it, the local router will drop the packet and report this to its local node in the same way as explained in the previous.

After some time, the output queue regarding node 1d at router 11d may have drained below another threshold, also set in the router configuration data 18, called the XON-level, or transmit-ON threshold, for a specific router.

When the local router encounters the XON threshold for a specific local node, it will signal to other routers in the same way as in the case with XOFF, indicating to other routers that the node that was in XOFF, transmit off stage, and is now available again and data transmission to a node may resume.

The local router 11a will not signal the XON state to the local node 1a when the target node 1d is capable of receiving packets again.

If, for example, a node 1d has been in XOFF state for a time exceeding Keepalive 38 timeout settings, the router 11d may decide to disconnect the node 1d from the DSiP system 5. The node 1d has the possibility to re-authenticate itself later.

A router 11 also has a timeout setting called Node-Drain-timeout which is stored in the router configuration data 18. The node-drain-timeout is a time limit in which the router must be able to send data to a local node. If the node-drain-timeout value is exceeded, the router may disconnect the node from the DSiP system 5. The node 1 has the possibility to re-authenticate itself later. Similar timeout values exist for router-router connections 10.

### Router to router connections

As previously described, the router 11 will attempt, during its start, to create a connection to its neighboring router(s) according to settings in its router configuration data 18. A router 11 may create duplicate, parallel connections to a neighbor router 11. In other words, the connection 10 may consist of one or more, for example, but not limited to, IP network links.

### Initiator and target

A node 1a communicates with other nodes 1b, 1c etc. and/or the router 11 by sending packets which are formulated according to DSiP packet specifications 24 and/or DSiPS packet specifications 25.

A node, for example 1a, that wishes to send a DSiP message to another node or router, for example 1b, 11b, is called Initiator or Sender 28. The node 1b or router 11b who is receiving the message is called Target or Receiver 29.

### DSiP packet

DSiP packets 24 are typically used in, but not limited to, IP networks. The DSiP packet 24 may physically be transported using, but not limited to, TCP/IP and/or UDP protocols for example.

If, for example, a node 1 has access to an IP network connection and the node is configured for establishing its node-router connection 6 over an IPnetwork, the node will use the DSiP packet 24 format described below. The node configuration file 21 may contain the IP-address and port number for its router 11. The node should send its messages formulated as DSiPpackets 24 to the router and the router will respond using the same format.

A DSiP packet 24 contains elements from 2410 to 2422.

The DSiP packet 24 can thus be put into a TCP/IP packet and/or into an UDP packet, but not limited to the aforementioned, for transport and sent to the router. Likewise, the router 11a may put its DSiP packet 24 into a TCP/IP and/or a UDP-packet and send it to a node 1a or a neighboring router 11b who will deliver it to the target node.

### DSiPS packet

When sending DSiP messages over non-IP connections such as, but not limited to, asynchronous serial communication as in RS232 or radio modem links or when using Power Line modems etc., a special version of the DSiPpacket must be used. This special version is called DSiPS packet 25.

DSiPS packets 25 are typically used in, but not limited to, asynchronous data transmission connections such as for example non-IP connections. The DSiPS packet 25 may physically be transported using, but not limited to, asynchronous communication such as RS232, RS422, RS485, Radio- and PLC-modems or any other two-way byte-based communication.

If, for example, a node 1 has access to a RS232 serial port which is connected to a router and the node is configured for establishing its node-router connection 6 over this port, the node will use the DSiPS packet 25 format described below. The node configuration file 21 may contain baud rate, parity, word-length and other necessary serial port parameters for this communication link to a router 11. The node should send its messages formulated as DSiPS packets 25 to the router and the router will respond using the same format.

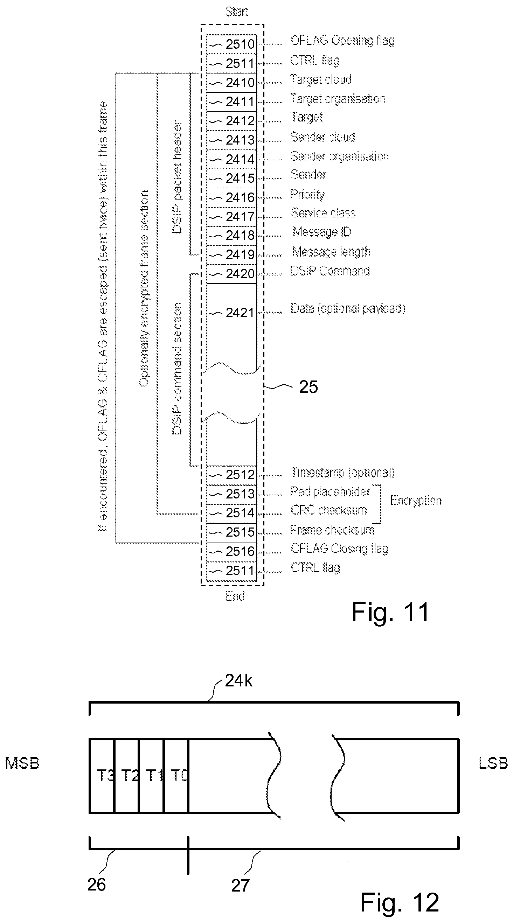

Please refer to Figure 11.

A DSiPS packet 25 is exactly the same as the DSiP 24 packet described earlier with a few additions, listed below:
- Time stamp is added at the end of the packet
- Encrypted: Padding is added at the end
- Encrypted: Checksum is added at the end
- Encrypted: Packet is encrypted
- Checksum is calculated from the packet and added at the end

A DSiPS packet 25 begins with an opening flag 2510 and ends with a closing flag 2516. Both opening and closing flags are followed by a control flag 2511. This represents the DSIPS packet 25 frame from start to end.

A single data value within the DSiPS packet frame that might have the same value as the opening flag 2510 and/or the closing flag 2516 must be escaped by entering the data value twice when constructing/encoding a DSiPS packet 25.

When the packet is read/decoded, two consecutive similar data values with equal value as the opening flag or the closing flag are treated as a single data value.

### DSiP packet header

The DSiP packet header section contains information and directives for routing, and packet handling in addition to the DSIP command 27.

### Target cloud (2410)

As previously explained, when a node 1 starts, it should register and authenticate itself to a router 11.

A router 11 accepting authentication from a node 1 will make an internal entry into its routing table containing the node location. In other words; the router 11 dynamically updates its routing table with information on how to reach the node 1.

If, for example a router 11a is connected to other routers 11b, 11c via router-router connections 10a, 10b the router 11a may dynamically share its routing information to the other routers when the node 1a has properly authenticated itself to the router 11a. The routers 11 share dynamically information regarding nodes location and connection 6 state between themselves. Routing information is distributed when a node 1 connects or disconnects. This method ensures that all routers in a DSiP system 5 will know where to find the nodes 1.

The cloud 31 concept is a routing information delimiter. In a DSiP system 5 routers 11 belong to clouds 31 as defined in the router configuration files 18.

Interconnected routers belonging to different cloud numbers will not share routing information to each other. They may however, send DSiP packets 24, 25 to each other.

### Target organization (2411)

This field will contain the organization number of the receiving node. The receiving node may determine if it responds to a packet sent from another organization's node.

### Target (2412)

This field is the receiver's node number. All nodes 1 in a DSiP system 5 must have unique node numbers within the same cloud 31.

### Sender cloud (2413)

The sender cloud number is a routing directive for the routers. A sender node must use the same cloud number as the router it has authenticated itself into.

### Sender organization (2414)

All nodes 1 in a DSiP message routing system must belong to one or more organizations. The organization numbers are defined in the router configuration data 18 and the node configuration data 21.

This field indicates the nodes current organization. A node is can not forge or fake its organization number. Packets from nodes with invalid organization numbers will be discarded by the local router.

### Sender / Node number (2415)

All nodes 1 in a DSiP system 5 must have unique node numbers within one cloud 31. Node numbers are positive integer numbers starting from number one (number 1).

Two or more nodes with the same number are not allowed to exist in a DSiP routing system 5. The first node that authenticates itself correctly with a specific node number will be accepted. The second node that presents the same specific node number will be subject for PROBE testing in order to resolve if the node is attempting to create multiple physical connections to the router.

The Sender node number will by used by the receiver as reply-to address.

### Priority (2416)

The priority field in a DSiP packet 24, 25 affects the router's 11 output buffer, or queue, sorting.

Packets 24, 25 with the lowest priority fill the output buffer in the order they arrive to the router.

Packets with higher priority will be sorted to the output buffers top in order to be sent first.

Packets with the highest priority will be sent from the router's output buffer in the order they have arrived to the router, that is, first come first serves.

### Service class (2417)

The service class is a parameter used for filtering traffic according the routes cost factor 34. All service classes are associated with a cost factor setting.

If the cost factor for the route is less than, or equal to the cost factor setting for a specific service class, the packet will be routed to its destination. If not, the packet will be dropped and the sender will be notified.

### Message ID (2418)

Packets 24, 25 may be numbered sequentially. This feature is useful in situations where a reply to a command is not atomic, that is, does not fit into a single packet. For example, a video stream may be sent over DSiP. The sender will number each packet in the stream with a consecutively increasing packet number. The receiver may use the packet number, or message ID, for sorting the incoming packets in a right sequence. The message ID numbering is also useful in situations where, for example, a node and a router communicate with each other over multiple physical links.

### Message length (2419)

The message length expresses how long the message is in terms of number of bytes.

### DSiP command word (2420)

The DSiP command word 2420 contains a DSiP command 27 which defines what the DSiP packet(s) 24 and/or DSiPS 25 packet(s) shall be used for.

The command word 2420 also contains DSiP command type flags 26 that further specify the type and behavior of the DSiP command word 2420.

### DSiP command type flags (26)

The DSiP command type flags 26 define the nature, of a DSiP packet 24 25, that is, the *type* of the packet. The type of packet is an important factor in the system arbitration.

For example, a node 1 may send a packet 24, 25 containing a DSiP command 27 to a target 29. The node 1 may reply with an acknowledgement, and/or the node may reply with a response to the command and so on.

The packet type, whether it is a command, acknowledgement or response to a command, is determined by the DSiP command type flags 26.

DSiP has eight packet types as defined in the tables in figures 14 and 15.

The command type flags 26 in the packet 24, 25 may request that the target 29 must respond to this command by acknowledging success, ACK 32 or acknowledging failure, NAK 33.

On the other hand, a node may send a packet to a target without requesting feedback in terms of success or failure.

The initiator/sender 28 will determine by itself if it requires a response to the packet it is sending by setting the appropriate command type flags 26.

The purpose of this mechanism is to allow the initiator 28 to decide if a response to a DSIP 24, 25 packet is required or not. In many cases there is no need for a response from the target 29 due to obvious reasons.

A command might for example rotate or turn a CCTV camera and the action can be observed in a video stream - thus requiring explicit acknowledging from the camera would obviously be unnecessary because the user will see in the video stream if the camera moves or not. On the other hand, other commands may crucially require a response from the receiver. For example, a user may remotely control street lights in a city by sending DSiP 24, 25 packets to an outdoor lamp controller located far from the user. In this type of application the user is most interested to know if the lighting control command was successful or failed. The DSiP command type flags 26 would in this case be set to require feedback response from the receiver or Target 29.

Simply put: In some cases it feedback is less important. In other cases the feedback is absolutely imperative and important.

Observe that DSiP command type flag T3 is reserved and should always be set to 0 (zero, cleared).

### Node to node handshake and router responses

The DSiP ACK and NAK messages are meant for indicating success and failure respectively. The originator of these messages may be a node 1 and/or the router 11.

A sender node 1 may request its receiving counterpart, that is, target 29, to reply with success or failure messages, that is ACK 32 or NAK 33 messages 24 25.

If the sender/initiator 28 node wants to get feedback in terms of ACK or NAK, it must set the appropriate DSiP command type flags 26 accordingly, that is the flags must be set to INITIATORCMDACK.

The receiving counterpart can be a node 1 or a router 11. For example, when the node 1 sends its authentication request, it may ask the router 11 to reply if the authentication was successful or not.

The router 11 may in some cases send spontaneous ACK/NAK 32, 33 messages to a node 1 regardless if the node has requested response by setting the DSiP command type flags 26 or not. A node 1 should always analyze packet 24, 25 contents of the packets it receives.

For example, if an Initiator node sends a message to a Target node, and the Target node has become unreachable because of for example lost connection, node down etc., the router 11 will respond to its local Initiator node with a NAK message where the sender 28 information set to ROUTER. The node 1 must read the message 24, 25 and the cause contained in the data section of the packet 2421.

For example, an initiator node 1 sends data 24, 25 to a target node, and the target is disconnected from the DSiP system 5, or gets disconnected just after the initiator did send its packet, the router will respond to the initiator node, with a NO_ROUTE-message.

A router may also respond to a node with a NAK message 24, 25 and the message data section 2421 set to PACKET_DROPPED in case the service class 36 and routing cost 34 mechanisms have forced the router 11 to discard messages 24, 25 sent by the node.

As a conclusion: The router 1 may generate and send ACK/NAK messages to a local node without that node explicitly demands a response by setting appropriate DSiP command type flags 26.

### DSiP ACK message (32)

The DSiP ACK message is used between nodes for handshaking purposes.

When a target 29, for example a node, receives a valid DSiP command service request, the target must send an acknowledgement to the initiator 28 if the initiator requests so by setting the T2, T1, and T0 command type flags 26 in the DSiP command word 2420 accordingly.

The target response acknowledgement message consists of single DSiP ACK-messages 32. The ACK-message may contain a varying amount of data, depending on the Initiator's original request.

For example, the ACK response to a "Get *focus"* command fits into a single ACK-message in a packet 24, 25 with command type flags 26 indicating type 2 or type 3.

However a response to a *"Get single image"-command 27* usually does not fit into a single 24, 25 packet and in this case the image data will be sent to the initiator as a sequence of Command Response Messages as indicated by command type flags 26 type 4 or type 5.

The Acknowledge (SUCCESS) message is of type 2 if the ACK is sent from the initiator to the target, or type 6, if sent from target to initiator. The rest of the DSiP command word 2420 contains the acknowledged command number 27.

For example, an initiator sends a type 1 message 24, 25 to the target, with the "Get focus"-command number 27 in the command word 2420. The target must respond with an acknowledge and returns a type 6 message with the same "Get focus" command number in the command word, if the command was received successfully and if the request could be serviced.

The actual focus data is contained in the response frame's data block section 2421.

The acknowledge mechanism from the initiator to the target is equal except for the different message type number.

### DSiP NAK message (33)

The DSiP NAK message is used between nodes for handshaking purposes. It is also used by the router 11 in order to alert the node 1 of an abnormal condition.

If, for example, a node 1 receives a message 25 with a bad checksum 2514, 2515, the packet must be dropped by the node 1.

If a node 1 received a message 25 successfully, but the requested command 27 could not be serviced, the receiver must respond with a NAK message of type 7 (or type 3) with the command section 27 set to the command number 27 that could not be serviced.

If the receiver's input command queue is full and the receiver cannot store the received requested service, the receiver must respond with a NAK message type 3 or 7, with a "Buffer Full" command in the command section 27 of the response.

### Combining IP and non-IP data-transmission and networks

The DSiP router 11 is capable of accepting connections 6 from, but not limited to, IP-based networks and non-IP sources, for example full- and/or half-duplex asynchronous and/or synchronous serial lines.

Nodes 1 use different packet types 24, 25 depending on the kind of physical data transfer channels are available to it. A node may send and receive DSiP 24 packets when it uses for example IP networks for communicating, and it may send and receive DSiPS 25 packets when the data communication channel is non-IP based, for example a serial line, but not limited to, for example a RS232 line.

When, for example, the router 11 receives a DSiPS 25 packet from a serial line source and the packets destination is a node 1 connected with an IP network, the router is capable of converting the DSiPS 25 packet into a DSIP 24 packet and vice versa. This mechanism allows for sending messages from a node to another over several type of transfer media and thus combining IP and non-IP data transfer in a transparent way where nodes do not need to worry about physical transport issues.

It is worth observing that the content of the DSiPS packet 25 is very much the same as the DSiP packet 24.

For example, see Fig 3. This aforementioned mechanism allows for, but not limited to, creating a VPN (Virtual Private Network) between two computers 9a and 9d over a multitude of physical connections that can be IP- and non-IP based. By definition, a VPN tunnel cannot use several physical media simultaneously and the communication must be IP-based between the VPN server and client.

A computer 9a may run VPN-client software and a computer 9d may run a VPN-server. By definition, the VPN-client/server software in 9a and 9d will attempt to establish an IP-based communication tunnel between the computers 9a and 9d.

The nodes 1a and 1d act as communication gateways for the computers 9a and 9d respectively. When the VPN-client software in 9a attempts to send VPN messages to the VPN-server in 9d, the node 1a transports (tunnels) the VPN-messages and acts as gateway for 9a. When the VPN server software in 9d attempts to send messages to 9a, the node 1d acts as gateway for the computer 9d. Since the routing between nodes 1a and 1d is based on DSiP rules, the VPN-tunnel can now be shared and split between several physical media with both IP- and non-IP based transport layers.

It is worth noting that the node software 1a and node software 1d may reside in the computers 9a and 9d respectively. Since the nodes may be configured for using whatever communication resources the computers 9a and 9d may have, the layout results in multichannel routing capabilities between computers 9a and 9d.

Since the node-router connection 6 can be established over several physical media and the routers 11 may be interconnected over several physical media, for example but not limited to, a 3G cellular modem, an ADSL-modem etc. there will be several simultaneous physical media forming connections between the computers 9a and 9d. Should one or more physical media fail, it will not lead to disconnection in the computers VPN client/server tunnel as long as there is at least one working physical connection between the ending points in the DSiP system 5.

### Tunneling in DSiP

As explained, the DSiP system 5, routers 11 and nodes 1 send and receive packets 24, 25. The packet has capability to carry a payload that may be a DSiP command and parameters 2420 and 2421 respectively.

When the communication channel of choice is IP networks, the DSiP packets may be transported inside IP packets. There is however also a possibility of placing other packets, for example but not limited to, an IP packet or Ethernet packet, etc. in the payload section 2421 of a DSiP packet 24, 25.

A node 1 may have gateway functionality, that is, a node 1 may be accessed as an IP gateway. Consider for example an IP-based network segment. The network segment performs all regular things an IP network does. Should, for example but not limited to, a computer need to access another IP network segment, for example but not limited to, another machine or service in another IP network, the IP-gateway node 1 may transport the IP-packet in its payload to the other IP network segment and vice versa.

The aforementioned possibility of tunneling IP- and other protocols through DSiP routing, enables for example but not limited to, multichannel routing between two separate IP networks.

DSiP is capable of transporting a multitude of mostly packet oriented protocols through itself. This feature makes it possible to interconnect different networks, packet protocols etc. using both IP- and non-IP transport.

### Protocol and message translation

### Background

A vast number of hardware equipment and software in the world, machines, instruments, computers and software programs, do similar things but are incompatible in terms of communication protocols, control messages and related software.

### DSiP translation barrier (3)

In many cases, systems performing exactly the same, or closely similar tasks are not compatible when it comes to communication or protocol level messaging. Usually this is the case when systems are supplied by different vendors and manufacturers. The systems from different manufacturers would are not able to intercommunicate.

The solution to the aforementioned problem is to use a translation barrier 3.

For example, a traffic light system having traffic lights from three different manufacturers comprises traffic light controlling devices 9a, 9b and 9c - one for each of the traffic lights. A DSiP node resides in for example, but not limited to, a microcontroller type of microcomputer that is placed physically close each of the traffic light controlling devices 9a, 9b and 9c. The controlling devices are connected to nodes 1a, 1b and 1c correspondingly and the nodes have translation barriers 3a, 3b and 3c correspondingly.

A control room may also have a node 1d, controlling device 9d and a translation barrier 3d. Between translation barriers 3a, 3b, 3c and translation barrier 3d is a DSiP routing network.

The microcontrollers could physically interface using for example, but not limited to, RS232/422/485, or IP, or some other methods, to the traffic light controller units.

All communication between the microcontrollers and the traffic light controllers would be based on each systems rules and protocols. All communication from the microcontrollers towards the DSiP routing network would be based on DSiP rules.

Node 1d could, depending on the user interface console 9d, be a purely software based node which resides inside the user interface computer 9d.

As with the microcontrollers the node 1d would communicate with user interface protocols and messaging towards the user interface program, and with the DSiP protocol towards the DSiP routing solution.

Translation barrier 3a performs protocol and message translation from DSiP to system 9a protocols and messages and vice versa. Translation barrier 3b performs a similar translation for system 9b and so on.

The node 1d translates protocols and messages from the user interface 9d into DSiP and vice versa.

The result of the above described is, that all traffic light systems will be fully compatible with each other. One user interface is capable of handling all tasks of the three different systems 9a, 9b and 9c. The overall system would also benefit from all other items and topics related to the DSiP system, that is secure communication and overall efficiency. Finally, the control room would not be loaded with parallel incompatible user interfaces. If the user would desire, a secondary user interface could be added to the system, resulting in a truly redundant system.

### Encryption

Encryption may be used on node to router 6 and/or router to router 10 connections. The encryption of choice is determined by, for example, but not limited to, operating system resources. None, one, some or all connections 6, 10 may use encryption.

For example, if the connection is TCP/IP based, the encryption can be, but not limited to, Secure Socket Layer (SSL) with AES256 encryption or if available, for example, but not limited to, XTEA 128bit encryption may be used.

When using DSiPS 25 connections, for example, but not limited to, XTEA 128bit encryption can be used.

A system administrator, or creator, may decide to set up a DSiP system 5 which does not use encryption in its connections. For example, if the system is used for routing a VPN-tunnel, the VPN will be encrypted by itself, which means that the administrator may consider the traffic to be adequately encrypted for the purpose. However, if the system administrator wants to reduce possibility for outsiders to analyze the traffic sent, for example, but not limited to, as DSiP packets 24 over Internet, he/she may decide to use encryption on the DSiP connections.

Note that all the configuration data for routers 18, nodes 21, authentication servers 15, network management servers 16 and configuration servers 24 may be strongly encrypted too.

### Use of certificates

A system administrator, or designer, may decide that in order to further increase reliability of recognizing a peer (node) as an element in the DSiP system 5, the system may use officially authorized certificates. If, for example higher security is required, certificates can be used, for example, but not limited to, on SSL encrypted connections.

If certificates are used, the certificate exchange is two-way, that is, a valid certificate is needed by both peers in the system.

### Special elements in a DSiP system

A DSiP system 5 can contain a number of elements as described below.

### Network Management Server (12)

The task of the Network Management-server, or NM server, software is to keep track of the current state of the DSiP network. It logs all connections and disconnections of nodes 1 and routers 11.

It also receives information of the dataflow between nodes and routers, such as sent and received data amounts and keepalive message turnaround times which can be used, for example but not limited to, diagnostic purposes.

The NM server receives information from routers 11 and logs illegal node authentication attempts.

The NM-server provides an interface for an external graphical user interface, or GUI, application. The NM server GUI application may query the connection state of nodes 1 and routers 11.

It can also send diagnostic commands, for example but not limited to, such as tracing a route to a node or run a remote diagnostic on a node.

### Authentication Server (14)

The authentication server 14 software provides authentication information used by the DSiP routers 11 for node authentication purposes. For clarity, the router configuration data 18 will contain authentication parameters for the router 11 which it uses for creating valid neighbor connections 10.

The authentication information contains password, organization numbers, service levels, keepalive interval etc. parameters.

If a specific node 1 attempts to authenticate itself to a router, and the packet 24, 25 from the node is correctly formulated but the router 11 does not have valid information about the specific node, the router 11 will send a request for authentication data 24, 25 to the authentication server 14. The authentication server will reply to the router's request by sending a message containing correct credentials for the node, and the node will be accepted into the DSiP system 5.

The information sent by the authentication server can be set to be valid for specific duration in time. If the authentication information sent by the authentication server has expired, the router must re-send its request for valid authentication data concerning a specific node. The validity period for the authentication data is stored in the authentication server's configuration data 15.

The validity of authentication data may also be set to expire at a certain date after which the concerned node may no longer authenticate itself into the DSiP system 5.

The authentication server 14 may operate in two different modes: LOCAL mode or GLOBAL mode. The operation mode is set and stored in the authentication server data 15.

If the mode is LOCAL the authentication information is sent only to the router which requests authentication information. If the operation mode is set to GLOBAL, the authentication server will send the authentication record concerning a node 1 to all routers in a DSiP system 5 when any router has sent a request for authentication information to the authentication server.

This means in short, that when using the global mode, the authentication server will update all routers in the system based on a single router's request.

### Configuration Server (7)

A DSiP system 5 may be amended with a Configuration Server, or in short CS. The configuration server is a separate, application specific software instance which is used for maintaining, for example but not limited to, firmware of specific hardware. The configuration server is typically not directly connected to the DSiP system 5, it's a separate entity.

Communication with the configuration server may be based on other protocols than DSiP. The configuration server can also provide a node 1 with new information on how to reach and contact a router 11. The configuration server will also provide a node 1 with a time-setting, which may be used by the node for its own purposes.

### Synchronization Node (19)

A DSiP system 5 may be amended with a special node called Sync-node 19. The typical purpose of the sync-node is to synchronize, for example but not limited to, authentication server data 15 across the system if multiple authentication servers 14 are used.

For example, the system administrator might enter new parameters for new nodes into the first authentication server data 15a storage. The adjacent sync-node 19a will detect that new data has been entered into the first authentication server data 15a and propagate the changes to the other authentication server data 15b via the its sync-node peer 19b or peers.

See figure 3.

### Alarm Node (20)

If a DSiP system 5 is equipped with an alarm node 20, the router 11 may send messages 24, 25 to it, in order to indicate an abnormal condition which may have its origin in several circumstances such as authentication or password problems.

### Keep alive (38)

A router frequently test all its connections 10, 6 by sending special packets 24, 25 called Keepalive 38. The sending interval is adjustable and stored in the router's configuration data 18 and/or the authentication server's configuration data 15. In addition to the keepalive interval, the configuration data will contain the number of keepalive tests to be used before a communication link 10, 6 is considered to be broken.

If a node-router connection 6 has not had any traffic in terms of received packets 24, 25 from the router's 11 perspective, the router will send a keepalive message to the node 1. The node 1 must respond with a DSiP ACK message 32 within the keepalive interval for this specific node 1.

If the specific local node 1 does not comply and respond with the ACK message 32 within the keepalive interval, the router may send a number of new keepalive messages to the node.

If the node 1 does not respond to any of the keepalive messages, it is considered to be broken and will be disconnected from the router.

The keepalive messaging is always directed from the router towards its local node.

For information, a node may enhance the link-testing by expecting packets 24, 25 from the router. If the router 11 has been silent for a certain period, the node may implement its own mechanism for detecting asymmetrically broken links to its router. The node may for example, but not limited to, send a request to the router asking for its own name. If the message 24, 25 has correct DSiP command state flags 26, the router must respond to the node.

If no response arrives, the node 1 can consider that the node-router 6 link is broken.

## Claims

1. A router element (11) for a network system (5) comprising router elements, node elements and one or more authentication servers, the router element comprising means for:
establishing and accepting an authenticated and encrypted connection with a neighboring router element, comprising using a valid certificate for both peers of the connection;
transmitting routing information to a connected neighboring router element;
receiving routing information from a connected neighboring router element;
accepting an authentication request from a node element (1) on the basis of authentication information received from an authentication server;
establishing an encrypted connection with an authenticated node element, comprising using a valid certificate for both peers of the connection;
routing packets from a first node element to a second node element based on received routing information through one or more simultaneous and parallel transmission paths formed by a plurality of node-router connections (6) and/or router-router connections (10), each of the connections being associated with a set cost factor indicating a cost in terms of finances, wherein a route from the first node element to the second node element having the lowest cost factor is preferred in the routing;
maintaining a transmission path regardless of changes in router-router connections (10) between said first and said second node element based on received routing information as long as at least one continuous and functional transmission path exists between said node elements;
accepting connections (6) from IP-based networks and non-IP sources; and
converting packets from IP-based network to non-IP recipient and from non-IP source to IP-based network.

2. A router element (11) according to claim 1, **characterized in that** said router element (11) comprises means for establishing and maintaining one or more simultaneous and parallel transmission paths between a first node element and a second node element wherein said one or more transmission paths are seen as a single communication path by any external element (devices, software and equipment) connected to any of the node elements as long as at least one continuous and functional transmission path exists.

3. A router element (11) according to claim 1, **characterized in that** said router element (11) has means for using simultaneously multiple different communication media that may form communication links as said transmission path.

4. A router element (11) according to claim 1, **characterized in that** said router element (11) has means for transmitting said routing information to said connected neighboring router element when a change occurs in a node-router connection (6) or router-router connection (10) and when said router element (11) receives a changed routing information from a neighboring router element.

5. A router element (11) according to claim 4, **characterized in that** said router element (11) has means for storing and using availability information of all the node (1) and router elements (11) of the network system (5).

6. A router element (11) according to claim 1, **characterized in that** said router element (11) has means for detecting symmetrically and asymmetrically broken node-router connections (6) and router-router connections (10) by sending a probe message and receiving a response message, and means for disconnecting the connection that does not provide a response message to the probe message.

7. A router element (11) according to claim 1, **characterized in that** said router element (11) has means for routing packets (24, 25) with multiple receiving node element addresses, wherein said router element has means for forwarding a packet (24, 25) with multiple receiving node addresses to a second router element if transmission paths of at least two receiving node addresses have common second router, and means for duplicating the packet (24, 25) with multiple receiving node addresses to be routed to a third router element and a fourth router element when the router element (11) is the last common router element (11) in transmission paths of the at least two receiving node addresses.

8. A router element (11) according to claim 1, **characterized in that** said router element (11) has means for detecting a congestion problem in a connected node element (1), adding information about the congestion problem to routing information, and sending the changed routing information to neighboring router elements.

9. A router element (11) according to claim 1, **characterized in that** said router element (11) has means for deciding whether to route a packet (24, 25) forward or to discard the packet (24, 25) based on network topology or routing information.

10. Method for routing packets (24, 25) between nodes (1) of a network system comprising router elements, node elements and one or more authentication servers, wherein the method comprises steps of:
establishing an authenticated and encrypted connection from a router element (11) to a neighboring router element, comprising using a valid certificate for both peers of the connection;
transmitting routing information from a router element to a connected neighboring router element;
authenticating a first node element (1) to a router element (11) on the basis of authentication information received from an authentication server;
establishing an encrypted connection between the first authenticated node element and a router element (11), comprising using a valid certificate for both peers of the connection;
establishing an encrypted connection between a second authenticated node element and a router element (11), comprising using a valid certificate for both peers of the connection;
routing packets (24, 25) from a first node element to a second node element based on received routing information through one or more simultaneous and parallel transmission paths formed by a plurality of node-router connections (6) and/or router-router connections (10), each of the connections being associated with a set cost factor indicating a cost in terms of finances, wherein a route from the first node element to the second node element having the lowest cost factor is preferred in the routing; and
maintaining a transmission path regardless of changes in router-router connections (10) between said first and said second node element based on received routing information as long as at least one continuous and functional transmission path exists between said node elements,
wherein at least one transmission path comprises an IP-based and a non-IP-based connection between nodes (1) and routers (11).

11. A computer readable media comprising a software program product for routing packets (24, 25) between node elements (1) of a network system (5) comprising router elements, node elements and one or more authentication servers, wherein the software program product comprises computer executable program code for:
establishing an authenticated and encrypted connection to a neighboring router element, comprising using a valid certificate for both peers of the connection;
transmitting routing information to a connected neighboring router element;
receiving routing information from a connected neighboring router element;
accepting an authentication request from a node element on the basis of authentication information received from an authentication server;
establishing an encrypted connection to an authenticated node element, comprising using a valid certificate for both peers of the connection;
routing packets from a first node element to a second node element based on received routing information through one or more simultaneous and parallel transmission paths formed by a plurality of node-router connections (6) and/or router-router connections (10), each of the connections being associated with a set cost factor indicating a cost in terms of finances, wherein a route from the first node element to the second node element having the lowest cost factor is preferred in the routing; and
maintaining a transmission path regardless of changes in router-router connections (10) between said first and said second node element based on received routing information as long as at least one continuous and functional transmission path exists between said node elements,
wherein at least one transmission path comprises an IP-based connection and a non-IP-based connection between nodes (1) and routers (11).

12. A network system (5) comprising:
router elements (11) of claim 1;
node elements (1); and
one or more authentication servers (14) comprising authentication information for node element authentication.

13. A network system according to claim 12, **characterized in that** the network system (5) further comprises two node elements (1) and an external element after at least one node element (1), wherein at least one of the two node elements (1) comprises a translation barrier (3), wherein a system specific message is translated to another system specific message.

## Patentansprüche

1. Router-Element (11) für ein Netzwerksystem (5), das Router-Elemente, Knotenelemente und einen oder mehrere Authentifizierungsserver umfasst, wobei das Router-Element Mittel umfasst zum:
Aufbauen und Akzeptieren einer authentifizierten und verschlüsselten Verbindung mit einem benachbarten Router-Element, umfassend die Verwendung eines gültigen Zertifikats für beide Peers der Verbindung;
Übermitteln von Routing-Informationen an ein angeschlossenes benachbartes Router-Element;
Empfangen von Routing-Informationen von einem angeschlossenen benachbarten Router-Element;
Akzeptieren einer Authentifizierungsanforderung von einem Knotenelement (1) auf der Grundlage von Authentifizierungsinformationen, die von einem Authentifizierungsserver empfangen wurden;
Aufbauen einer verschlüsselten Verbindung mit einem authentifizierten Knotenelement, umfassend die Verwendung eines gültigen Zertifikats für beide Peers der Verbindung;
Routing von Paketen von einem ersten Knotenelement zu einem zweiten Knotenelement basierend auf empfangenen Routing-Informationen durch einen oder mehrere gleichzeitige und parallele Übertragungspfade, die durch eine Vielzahl von Knoten-Router-Verbindungen (6) und/oder Router-Router-Verbindungen (10) gebildet werden, wobei jede der Verbindungen mit einem eingestellten Kostenfaktor assoziiert ist, der einen Kostenaufwand in Bezug auf Finanzen angibt, wobei eine Route von dem ersten Knotenelement zu dem zweiten Knotenelement, die den niedrigsten Kostenfaktor aufweist, bei dem Routing bevorzugt wird;
Aufrechterhalten eines Übertragungspfades unabhängig von Änderungen in Router-Router-Verbindungen (10) zwischen dem ersten und dem zweiten Knotenelement basierend auf empfangenen Routing-Informationen, solange mindestens ein kontinuierlicher und funktionaler Übertragungspfad zwischen den Knotenelementen existiert;
Akzeptieren von Verbindungen (6) von IP-basierten Netzwerken und Nicht-IP-Quellen; und
Konvertieren von Paketen vom IP-basierten Netzwerk zum Nicht-IP-Empfänger und von der Nicht-IP-Quelle zum IP-basierten Netzwerk.

2. Router-Element (11) nach Anspruch 1, **dadurch gekennzeichnet, dass** das Router-Element (11) Mittel zum Aufbauen und Aufrechterhalten eines oder mehrerer gleichzeitiger und paralleler Übertragungspfade zwischen einem ersten Knotenelement und einem zweiten Knotenelement umfasst, wobei der eine oder die mehreren Übertragungspfade von jedem externen Element (Vorrichtungen, Software und Ausrüstung), das mit einem der Knotenelemente verbunden ist, als ein einziger Kommunikationspfad gesehen werden, solange mindestens ein kontinuierlicher und funktionaler Übertragungspfad existiert.

3. Router-Element (11) nach Anspruch 1, **dadurch gekennzeichnet, dass** das Router-Element (11) Mittel zur gleichzeitigen Verwendung mehrerer unterschiedlicher Kommunikationsmedien, die Kommunikationsverbindungen bilden können, als den Übertragungspfad aufweist.

4. Router-Element (11) nach Anspruch 1, **dadurch gekennzeichnet, dass** das Router-Element (11) Mittel zum Übertragen der Routing-Information an das angeschlossene benachbarte Router-Element aufweist, wenn eine Änderung in einer Knoten-Router-Verbindung (6) oder Router-Router-Verbindung (10) auftritt und wenn das Router-Element (11) eine geänderte Routing-Information von einem benachbarten Router-Element empfängt.

5. Router-Element (11) nach Anspruch 4, **dadurch gekennzeichnet, dass** das Router-Element (11) Mittel zum Speichern und Verwenden von Verfügbarkeitsinformationen aller Knoten (1) und Router-Elemente (11) des Netzwerksystems (5) aufweist.

6. Router-Element (11) nach Anspruch 1, **dadurch gekennzeichnet, dass** das Router-Element (11) Mittel zum Erkennen von symmetrisch und asymmetrisch unterbrochenen Knoten-Router-Verbindungen (6) und Router-Router-Verbindungen (10) durch Senden einer Prüfnachricht und Empfangen einer Antwortnachricht sowie Mittel zum Trennen der Verbindung, die keine Antwortnachricht auf die Prüfnachricht liefert, aufweist.

7. Router-Element (11) nach Anspruch 1, **dadurch gekennzeichnet, dass** das Router-Element (11) Mittel zum Routing von Paketen (24, 25) mit mehreren Empfangsknotenelementadressen aufweist, wobei das Router-Element Mittel zum Weiterleiten eines Pakets (24, 25) mit mehreren Empfangsknotenadressen an ein zweites Router-Element aufweist, wenn Übertragungspfade von mindestens zwei Empfangsknotenadressen einen gemeinsamen zweiten Router aufweisen, und Mittel zum Duplizieren des Pakets (24, 25) mit mehreren Empfangsknotenadressen zur Weiterleitung an ein drittes Router-Element und ein viertes Router-Element, wenn das Router-Element (11) das letzte gemeinsame Router-Element (11) in Übertragungspfaden der mindestens zwei Empfangsknotenadressen ist.

8. Router-Element (11) nach Anspruch 1, **dadurch gekennzeichnet, dass** das Router-Element (11) Mittel zum Erkennen eines Überlastungsproblems in einem angeschlossenen Knotenelement (1), zum Hinzufügen von Informationen über das Überlastungsproblem zu den Routing-Informationen und zum Senden der geänderten Routing-Informationen an benachbarte Router-Elemente aufweist.

9. Router-Element (11) nach Anspruch 1, **dadurch gekennzeichnet, dass** das Router-Element (11) Mittel aufweist zum Entscheiden auf der Grundlage von Netzwerktopologie- oder Routing-Informationen, ob ein Paket (24, 25) weiterzuleiten oder zu verwerfen ist.

10. Verfahren zum Routing von Paketen (24, 25) zwischen Knoten (1) eines Netzwerksystems, das Router-Elemente, Knotenelemente und einen oder mehrere Authentifizierungsserver umfasst, wobei das Verfahren die folgenden Schritte umfasst:
Aufbauen einer authentifizierten und verschlüsselten Verbindung von einem Router-Element (11) zu einem benachbarten Router-Element, umfassend die Verwendung eines gültigen Zertifikats für beide Peers der Verbindung;
Übertragen von Routing-Informationen von einem Router-Element zu einem angeschlossenen benachbarten Router-Element;
Authentifizieren eines ersten Knotenelements (1) an einem Router-Element (11) auf der Basis von Authentifizierungsinformationen, die von einem Authentifizierungsserver empfangen werden;
Aufbauen einer verschlüsselten Verbindung zwischen dem ersten authentifizierten Knotenelement und einem Router-Element (11), umfassend die Verwendung eines gültigen Zertifikats für beide Peers der Verbindung;
Aufbauen einer verschlüsselten Verbindung zwischen einem zweiten authentifizierten Knotenelement und einem Router-Element (11), umfassend die Verwendung eines gültigen Zertifikats für beide Peers der Verbindung;
Routing von Paketen (24, 25) von einem ersten Knotenelement zu einem zweiten Knotenelement basierend auf empfangenen Routing-Informationen durch einen oder mehrere gleichzeitige und parallele Übertragungspfade, die durch eine Vielzahl von Knoten-Router-Verbindungen (6) und/oder Router-Router-Verbindungen (10) gebildet werden, wobei jede der Verbindungen mit einem eingestellten Kostenfaktor assoziiert ist, der einen Kostenaufwand in Bezug auf Finanzen angibt, wobei eine Route von dem ersten Knotenelement zu dem zweiten Knotenelement, die den niedrigsten Kostenfaktor aufweist, bei dem Routing bevorzugt wird; und
Aufrechterhalten eines Übertragungspfades unabhängig von Änderungen in Router-Router-Verbindungen (10) zwischen dem ersten und dem zweiten Knotenelement basierend auf empfangenen Routing-Informationen, solange mindestens ein kontinuierlicher und funktionaler Übertragungspfad zwischen den Knotenelementen,
wobei mindestens ein Übertragungspfad eine IP-basierte und eine nicht-IP-basierte Verbindung zwischen Knoten (1) und Routern (11) umfasst.

11. Computerlesbares Medium, das ein Softwareprogrammprodukt zum Routing von Paketen (24, 25) zwischen Knotenelementen (1) eines Netzwerksystems (5) umfasst, das Router-Elemente, Knotenelemente und einen oder mehrere Authentifizierungsserver umfasst, wobei das Softwareprogrammprodukt computerausführbaren Programmcode umfasst zum:
Aufbauen einer authentifizierten und verschlüsselten Verbindung zu einem benachbarten Router-Element aufzubauen, umfassend die Verwendung eines gültigen Zertifikats für beide Peers der Verbindung;
Übermitteln von Routing-Informationen an ein angeschlossenes benachbartes Router-Element;
Empfangen von Routing-Informationen von einem angeschlossenen benachbarten Router-Element;
Akzeptieren einer Authentifizierungsanforderung von einem Knotenelement auf der Grundlage von Authentifizierungsinformationen, die von einem Authentifizierungsserver empfangen wurden;
Aufbauen einer verschlüsselten Verbindung zu einem authentifizierten Knotenelement, umfassend die Verwendung eines gültigen Zertifikats für beide Peers der Verbindung;
Routing von Paketen von einem ersten Knotenelement zu einem zweiten Knotenelement basierend auf empfangenen Routing-Informationen durch einen oder mehrere gleichzeitige und parallele Übertragungspfade, die durch eine Vielzahl von Knoten-Router-Verbindungen (6) und/oder Router-Router-Verbindungen (10) gebildet werden, wobei jede der Verbindungen mit einem eingestellten Kostenfaktor assoziiert ist, der einen Kostenaufwand in Bezug auf Finanzen angibt, wobei eine Route von dem ersten Knotenelement zu dem zweiten Knotenelement, die den niedrigsten Kostenfaktor aufweist, bei dem Routing bevorzugt wird; und
Aufrechterhalten eines Übertragungspfades unabhängig von Änderungen in Router-Router-Verbindungen (10) zwischen dem ersten und dem zweiten Knotenelement basierend auf empfangenen Routing-Informationen, solange mindestens ein kontinuierlicher und funktionaler Übertragungspfad zwischen den Knotenelementen,
wobei mindestens ein Übertragungspfad eine IP-basierte Verbindung und eine nicht-IP-basierte Verbindung zwischen Knoten (1) und Routern (11) umfasst.

12. Netzwerksystem (5) umfassend:
Router-Elemente (11) nach Anspruch 1;
Knotenelemente (1); und
einen oder mehrere Authentifizierungsserver (14), die Authentifizierungsinformationen für die Authentifizierung von Knotenelementen umfassen.

13. Netzwerksystem nach Anspruch 12, **dadurch gekennzeichnet, dass** das Netzwerksystem (5) ferner zwei Knotenelemente (1) und ein externes Element nach mindestens einem Knotenelement (1) umfasst, wobei mindestens eines der beiden Knotenelemente (1) eine Übersetzungsbarriere (3) umfasst, wobei eine systemspezifische Nachricht in eine andere systemspezifische Nachricht übersetzt wird.

## Revendications

1. Élément de routeur (11) pour un système de réseau (5) qui comprend des éléments de routeur, des éléments de nœud et un ou plusieurs serveurs d'authentification, l'élément de routeur comprenant des moyens pour :
établir et accepter une connexion authentifiée et chiffrée avec un élément de routeur avoisinant, qui comprend l'utilisation d'un certificat valide pour les deux pairs de la connexion ;
transmettre une information de routage à un élément de routeur avoisinant connecté ;
recevoir une information de routage depuis un élément de routeur avoisinant connecté ;
accepter une demande d'authentification depuis un élément de nœud (1) sur la base d'une information d'authentification reçue depuis un serveur d'authentification ;
établir une connexion chiffrée avec un élément de nœud authentifié, qui comprend l'utilisation d'un certificat valide pour les deux pairs de la connexion ;
router des paquets depuis un premier élément de nœud vers un second élément de nœud sur la base d'une information de routage reçue via un ou plusieurs chemins de transmission simultanés et parallèles formés par une pluralité de connexions nœud-routeur (6) et/ou de connexions routeur-routeur (10), chacune des connexions étant associée à un facteur de coût fixé qui indique un coût en termes financiers, dans lequel une route depuis le premier élément de nœud vers le second élément de nœud qui présente le facteur de coût le plus bas est préférée dans le routage ;
maintenir un chemin de transmission indépendamment de modifications dans des connexions routeur-routeur (10) entre ledit premier et ledit second élément de nœud sur la base d'une information de routage reçue tant qu'au moins un chemin de transmission continu et fonctionnel existe entre lesdits éléments de nœud ;
accepter des connexions (6) depuis des réseaux basés sur IP et des sources non-IP ; et
convertir des paquets depuis un réseau basé sur IP en un destinataire non-IP et depuis une source non-IP en un réseau basé sur IP.

2. Élément de routeur (11) selon la revendication 1, **caractérisé en ce que** ledit élément de routeur (11) comprend des moyens pour établir et maintenir un ou plusieurs chemins de transmission simultanés et parallèles entre un premier élément de nœud et un second élément de nœud dans lequel lesdits un ou plusieurs chemins de transmission sont considérés comme un chemin de communication unique par tout élément extérieur (dispositifs, logiciel et équipement) connecté à l'un quelconque des éléments de nœud tant qu'au moins un chemin de transmission continu et fonctionnel existe.

3. Élément de routeur (11) selon la revendication 1, **caractérisé en ce que** ledit élément de routeur (11) présente des moyens pour utiliser simultanément de multiples médias de communication différents qui peuvent former des liens de communication en tant que ledit chemin de transmission.

4. Élément de routeur (11) selon la revendication 1, **caractérisé en ce que** ledit élément de routeur (11) présente des moyens pour transmettre ladite information de routage audit élément de routeur avoisinant connecté lorsqu'une modification se produit dans une connexion nœud-routeur (6) ou une connexion routeur-routeur (10) et lorsque ledit élément de routeur (11) reçoit une information de routage modifiée depuis un élément de routeur avoisinant.

5. Élément de routeur (11) selon la revendication 4, **caractérisé en ce que** ledit élément de routeur (11) présente des moyens pour stocker et utiliser un information de disponibilité de tous les éléments de nœud (1) et de routeur (11) du système de réseau (5).

6. Élément de routeur (11) selon la revendication 1, **caractérisé en ce que** ledit élément de routeur (11) présente des moyens pour détecter de façons symétrique et asymétrique des connexions nœud-routeur (6) et des connexions routeur-routeur (10) brisées en envoyant un message de sondage et en recevant un message de réponse, et des moyens pour déconnecter la connexion qui ne fournit pas un message de réponse au message de sondage.

7. Élément de routeur (11) selon la revendication 1, **caractérisé en ce que** ledit élément de routeur (11) présente des moyens pour router des paquets (24, 25) avec de multiples adresses d'élément de nœud de réception, dans lequel ledit élément de routeur présente des moyens pour acheminer vers l'avant un paquet (24, 25) avec de multiples adresses de nœud de réception vers un deuxième élément de routeur si des chemins de transmission d'au moins deux adresses de nœud de réception présentent un second routeur commun, et des moyens pour dupliquer le paquet (24, 25) avec de multiples adresses de nœud de réception à router vers un troisième élément de routeur et un quatrième élément de routeur lorsque l'élément de routeur (11) est le dernier élément de routeur (11) commun dans des chemins de transmission des au moins deux adresses de nœud de réception.

8. Élément de routeur (11) selon la revendication 1, **caractérisé en ce que** ledit élément de routeur (11) présente des moyens pour détecter un problème de congestion dans un élément de nœud (1) connecté, ajouter une information sur le problème de congestion à l'information de routage, et envoyer l'information de routage modifiée à des éléments de routeur avoisinants.

9. Élément de routeur (11) selon la revendication 1, **caractérisé en ce que** ledit élément de routeur (11) présente des moyens pour décider de router ou non un paquet (24, 25) vers l'avant ou supprimer le paquet (24, 25) sur la base d'une topologie de réseau ou d'une information de routage.

10. Procédé destiné à router des paquets (24, 25) entre des nœuds (1) d'un système de réseau qui comprend des éléments de routeur, des éléments de nœud et un ou plusieurs serveurs d'authentification, dans lequel le procédé comprend des étapes qui consistent à :
établir une connexion authentifiée et chiffrée depuis un élément de routeur (11) vers un élément de routeur avoisinant, qui comprend l'utilisation d'un certificat valide pour les deux pairs de la connexion ;
transmettre une information de routage depuis un élément de routeur vers un élément de routeur avoisinant connecté ;
authentifier un premier élément de nœud (1) vers un élément de routeur (11) sur la base d'une information d'authentification reçue depuis un serveur d'authentification ;
établir une connexion chiffrée entre le premier élément de nœud authentifié et un élément de routeur (11), qui comprend l'utilisation d'un certificat valide pour les deux pairs de la connexion ;
établir une connexion chiffrée entre un second élément de nœud authentifié et un élément de routeur (11), qui comprend l'utilisation d'un certificat valide pour les deux pairs de la connexion ;
router des paquets (24, 25) depuis un premier élément de nœud vers un second élément de nœud sur la base d'une information de routage reçue via un ou plusieurs chemins de transmission simultanés et parallèles formés par une pluralité de connexions nœud-routeur (6) et/ou de connexions routeur-routeur (10), chacune des connexions étant associée à un facteur de coût fixé qui indique un coût en termes financiers, dans lequel une route depuis le premier élément de nœud vers le second élément de nœud qui présente le facteur de coût le plus bas est préférée dans le routage ; et
maintenir un chemin de transmission indépendamment de modifications dans des connexions routeur-routeur (10) entre ledit premier et ledit second élément de nœud sur la base d'une information de routage reçue tant qu'au moins un chemin de transmission continu et fonctionnel existe entre lesdits éléments de nœud,
dans lequel au moins un chemin de transmission comprend une connexion basée sur IP et une connexion non basée sur IP entre des nœuds (1) et des routeurs (11).

11. Support lisible par ordinateur qui comprend un produit de programme logiciel pour router des paquets (24, 25) entre des éléments de nœud (1) d'un système de réseau (5) qui comprend des éléments de routeur, des éléments de nœud et un ou plusieurs serveurs d'authentification, dans lequel le produit de programme logiciel comprend un code de programme exécutable par un ordinateur pour :
établir une connexion authentifiée et chiffrée vers un élément de routeur avoisinant, qui comprend l'utilisation d'un certificat valide pour les deux pairs de la connexion ;
transmettre une information de routage à un élément de routeur avoisinant connecté ;
recevoir une information de routage depuis un élément de routeur avoisinant connecté ;
accepter une demande d'authentification depuis un élément de nœud sur la base d'une information d'authentification reçue depuis un serveur d'authentification ;
établir une connexion chiffrée vers un élément de nœud authentifié, qui comprend l'utilisation d'un certificat valide pour les deux pairs de la connexion ;
router des paquets depuis un premier élément de nœud vers un second élément de nœud sur la base d'une information de routage reçue via un ou plusieurs chemins de transmission simultanés et parallèles formés par une pluralité de connexions nœud-routeur (6) et/ou de connexions routeur-routeur (10), chacune des connexions étant associée à un facteur de coût fixé qui indique un coût en termes financiers, dans lequel une route depuis le premier élément de nœud vers le second élément de nœud qui présente le facteur de coût le plus bas est préférée dans le routage ; et
maintenir un chemin de transmission indépendamment de modifications dans des connexions routeur-routeur (10) entre ledit premier et ledit second élément de nœud sur la base d'une information de routage reçue tant qu'au moins un chemin de transmission continu et fonctionnel existe entre lesdits éléments de nœud,
dans lequel au moins un chemin de transmission comprend une connexion basée sur IP et une connexion non basée sur IP entre des nœuds (1) et des routeurs (11).

12. Système de réseau (5) qui comprend :
des éléments de routeur (11) selon la revendication 1 ;
des éléments de nœud (1) ; et
un ou plusieurs serveurs d'authentification (14) qui comprennent une information d'authentification pour une authentification d'élément de nœud.

13. Système de réseau selon la revendication 12, **caractérisé en ce que** le système de réseau (5) comprend en outre deux éléments de nœud (1) et un élément extérieur après au moins un élément de nœud (1), dans lequel au moins l'un des deux éléments de nœud (1) comprend une barrière de traduction (3), dans lequel un message spécifique à un système est traduit en un autre message spécifique à un système.
